# EUROPEAN PATENT APPLICATION

(11) **EP 4 782 335 A1**
(43) Date of publication of application: **29.07.2026**
(21) Application number: 24881657.1
(22) Date of filing: 23.10.2024
(51) Int. Cl.: B64C 27/08, B60P 3/11

(54) **FLYING CAR, VEHICLE, AND AIRCRAFT**

(30) Priority: 23.10.2023 CN 202311382258
(71) Applicant: Guangdong Huitian Aerospace Technology Co., Ltd., Guangzhou, Guangdong Province 511400 (CN)
(72) Inventor: LIU, Shuaichen, Guangzhou, Guangdong 511400 (CN); QIU, Hao, Guangzhou, Guangdong 511400 (CN); WU, Li, Guangzhou, Guangdong 511400 (CN); ZHANG, Dehu, Guangzhou, Guangdong 511400 (CN); HUANG, Jinteng, Guangzhou, Guangdong 511400 (CN)
(74) Representative: Becker Kurig & Partner Patentanwälte mbB
(86) International application number: PCT/CN2024/126804
(87) International publication number: WO 2025/087293

(57) **Abstract**

The present application relates to a flying vehicle, an automobile, and an aircraft. The flying vehicle comprises an automobile and an aircraft. The automobile comprises an automobile body and a separation and connection device, a land cabin is fixedly arranged on the automobile body, and the separation and connection device is arranged on the automobile body; the aircraft comprises an aircraft body and a plurality of foldable rotors, and a flight cabin is fixedly arranged on the aircraft body; the plurality of foldable rotors are arranged on the aircraft body; the aircraft is capable of vertically taking off and landing on a ground, and when the aircraft is stopped on the ground, the separation and connection device is used for towing the aircraft to be coupled and connected to the automobile. In the present embodiments, the aircraft can be quickly and vertically stopped on the ground without the need to be accurately positioned with a bearing platform on the automobile body, subsequently, the separation and connection device of the automobile is connected to the aircraft again and tows the aircraft to the bearing platform, so that the control difficulty of coupling of the aircraft and the automobile is relatively low, and the foldable rotors are in a folded and static state during coupling and decoupling, thereby improving the use safety.

## Description

### Cross-reference to Related Applications

The present application claims priority to Chinese Patent Application No. 202311382258.8, filed on October 23, 2023, the content of which is incorporated herein by reference in its entirety.

### Technical Field

The present application relates to the technical field of transportation means, and in particular, to a flying vehicle, an automobile, and an aircraft.

### Background

With the development of automobile technology and aircraft technology, a flying vehicle integrating an automobile and an aircraft has emerged. The automobile serves as the land-based device of the flying vehicle and is provided with a bearing platform for parking the aircraft, and the automobile can carry the flying vehicle to travel on roads. The aircraft is detachably coupled to the bearing platform and can take off from the bearing platform.

In the known flying vehicles, the aircraft directly lands on the bearing platform of the automobile during landing operations. However, since the bearing platform of the automobile is a small landing surface, it is difficult for the aircraft to accurately align with a coupling position on the bearing platform, resulting in low landing efficiency and poor accuracy. Moreover, due to large weight, the aircraft can hardly be adjusted after landing. In addition, the power system of the aircraft keeps operating during landing, posing a safety hazard that the power system of the aircraft, such as rotors, may collide with the automobile during landing.

### Summary

### Technical Problem

The main objective of the present application is to provide a flying vehicle, an automobile and an aircraft, so as to improve safety during use.

### Technical Solutions

To achieve the above objectives, in a first aspect, the present application provides a flying vehicle, including an automobile and an aircraft detachably coupled to the automobile. The automobile includes an automobile body and a separation and connection device; a land cabin is fixedly arranged on the automobile body, and the separation and connection device is arranged on the automobile body; the aircraft includes an aircraft body and a plurality of foldable rotors, and a flight cabin is fixedly arranged on the aircraft body; the plurality of foldable rotors are arranged on the aircraft body; the aircraft is capable of vertically taking off from and landing on a ground after being separated from the automobile, and when the aircraft is parked on the ground, the separation and connection device is configured to connect to the aircraft and also to drive the aircraft to move onto the automobile body so that the aircraft is detachably coupled with the automobile.

In a second aspect, the present application further provides an automobile to be coupled with an aircraft. The aircraft is capable of vertically taking off from and landing on a ground after being separated from the automobile. The automobile includes an automobile body and a separation and connection device; a land cabin is fixedly mounted on the automobile body, and the separation and connection device is arranged on the automobile body. When the aircraft is parked on the ground, the separation and connection device is configured to connect to the aircraft and also to drive the aircraft to move on the ground to be received on the automobile body so that the aircraft is detachably coupled with the automobile.

In a third aspect, the present application further provides an aircraft to be coupled with an automobile. The aircraft is capable of vertically taking off from and landing on a ground after being separated from the automobile. The automobile is provided with a separation and connection device. The aircraft includes an aircraft body, a plurality of foldable rotors and a docking mechanism; a flight cabin is fixedly mounted on the aircraft body, the plurality of foldable rotors are arranged on the aircraft body, and the docking mechanism is connected to the aircraft body. When the aircraft is parked on the ground, the docking mechanism is adapted to engage with the separation and connection device, and the separation and connection device drives the aircraft to move on the ground to be received on the automobile, so that the aircraft is detachably coupled with the automobile.

### Beneficial Effects

Compared with the prior art, an embodiment of the present application provides a flying vehicle including an automobile and an aircraft, which are detachably coupled with each other. A separation and connection device is arranged on the vehicle. The separation and connection device is docked with the aircraft and tows the aircraft to achieve separation and coupling. The aircraft is configured to travel in the air, and includes an aircraft body and a plurality of foldable rotors arranged on the aircraft body. The aircraft body is a main structure of the aircraft, and a flight cabin is fixedly arranged on the aircraft body for people to ride. The plurality of foldable rotors are arranged on the aircraft body to provide power for the aircraft to take off and land vertically and travel in the air. Driven by the plurality of foldable rotors, the aircraft can vertically ascend into the air and travel. The aircraft and the automobile jointly constitute a flying vehicle having both land travel and flight functions. In the embodiment of the present application, after the aircraft finishes flying, the foldable rotors of the aircraft can be folded and then coupled to the automobile. Specifically, after the aircraft switches from a flight state to a state of being parked on the ground, the foldable rotors are folded. Then, the automobile travels to the vicinity of the aircraft and controls the automobile to align with the aircraft in position, so as to drive the separation and connection device to automatically connect to the aircraft body, and drive the aircraft body to move toward the automobile body until the aircraft body is detachably coupled to the bearing platform. In this embodiment, the aircraft and the automobile are two independent transportation devices which are detachably coupled. The aircraft needs to be decoupled from the automobile before takeoff. After decoupling, the aircraft is first parked on the ground, then the aircraft takes off from the ground and ascends into the air, while the automobile stays on land. Therefore, in the embodiment of the present application, the aircraft does not require precise positioning with the bearing platform, and can vertically land on the ground quickly. Then the automobile moves to a position near the aircraft and aligns with the aircraft, so that the separation and connection device is docked with the aircraft and tows the aircraft onto the automobile body. The control difficulty in coupling the aircraft body with the automobile is relatively low. Moreover, during the process of coupling the aircraft to the automobile and the process of decoupling, the foldable rotors are in a folded and stationary state, thereby improving the safety of the flying vehicle during use.

### Brief Description of the Drawings

In order to more clearly illustrate the technical solutions of the present application, the following is a brief introduction to the drawings required in the description of the embodiments. Obviously, the drawings described below are only some embodiments of the present application. For those of ordinary skill in the art, other drawings can be obtained based on these drawings without creative labor.
Fig. 1 is a schematic structural diagram of a flying vehicle provided by an embodiment of the present application.
Fig. 2 is a schematic structural diagram of the flying vehicle shown in Fig. 1 with an automobile being decoupled from an aircraft.
Fig. 3 is a schematic structural diagram of an automobile provided by an embodiment of the present application.
Fig. 4 is a schematic structural diagram of an aircraft provided by an embodiment of the present application.
Fig. 5 is a schematic structural diagram of the separation and connection device of the aircraft shown in Fig. 4.
Fig. 6 is a schematic structural diagram of the aircraft shown in Fig. 4 with arms folded and landing gear mechanisms deployed.
Fig. 7 is a schematic structural diagram showing an automobile and an aircraft of the flying vehicle shown in Fig. 1 being docked.
Fig. 8 is a schematic structural diagram of the aircraft shown in Fig. 7 moving toward a bearing platform.
Fig. 9 is a schematic structural diagram of the aircraft shown in Fig. 7 with its center of gravity transferred to a bearing platform.
Fig. 10 is a top-viewed schematic structural diagram of the aircraft of the flying vehicle shown in Fig. 1.
Fig. 11 is a schematic structural diagram of rotor revolution planes formed by the foldable rotors of the aircraft shown in Fig. 10.
Fig. 12 is a schematic structural diagram of a positional relationship between foldable rotors and an aircraft body of the aircraft shown in Fig. 10.
Fig. 13 is a schematic structural diagram of the aircraft shown in Fig. 10 with arms folded.
Fig. 14 is a schematic structural diagram of the aircraft shown in Fig. 10 with arms deployed.
Fig. 15 is a schematic structural diagram of the aircraft shown in Fig. 10 with foldable rotors deployed.
Fig. 16 is a schematic structural diagram of the aircraft shown in Fig. 10 with foldable rotors folded.
Fig. 17 is a schematic structural diagram of the aircraft shown in Fig. 10 with foldable rotors deployed.
Fig. 18 is a schematic flowchart of a flight control method for an aircraft provided in an embodiment of the present application.
Fig. 19 is a schematic functional block diagram of a flight control device disclosed in an embodiment of the present application.

### Detailed Description of Embodiments

In order to enable those skilled in the art to better understand the solutions of the present application, the technical solutions in the embodiments of the present application will be clearly and completely described below with reference to the accompanying drawings in the embodiments of the present application. Obviously, the described embodiments are merely some, not all of the embodiments of the present application. Based on the embodiments in the present application, all other embodiments obtained by those skilled in the art without creative efforts shall fall within the scope of the present application.

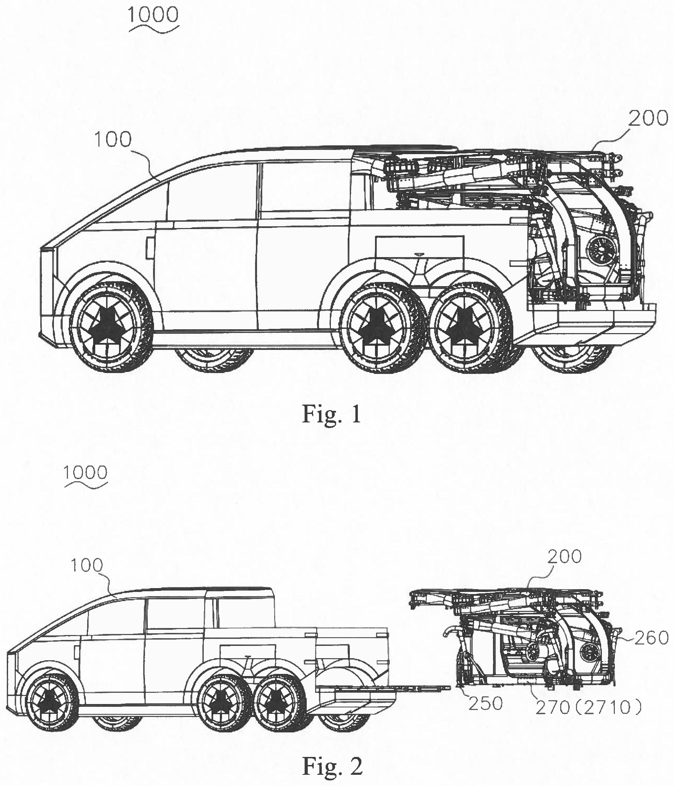

Referring to Figs. 1 and 2, this embodiment provides a flying vehicle 1000, including an automobile 100 and an aircraft 200. The automobile 100 and the aircraft 200 are detachably coupled.

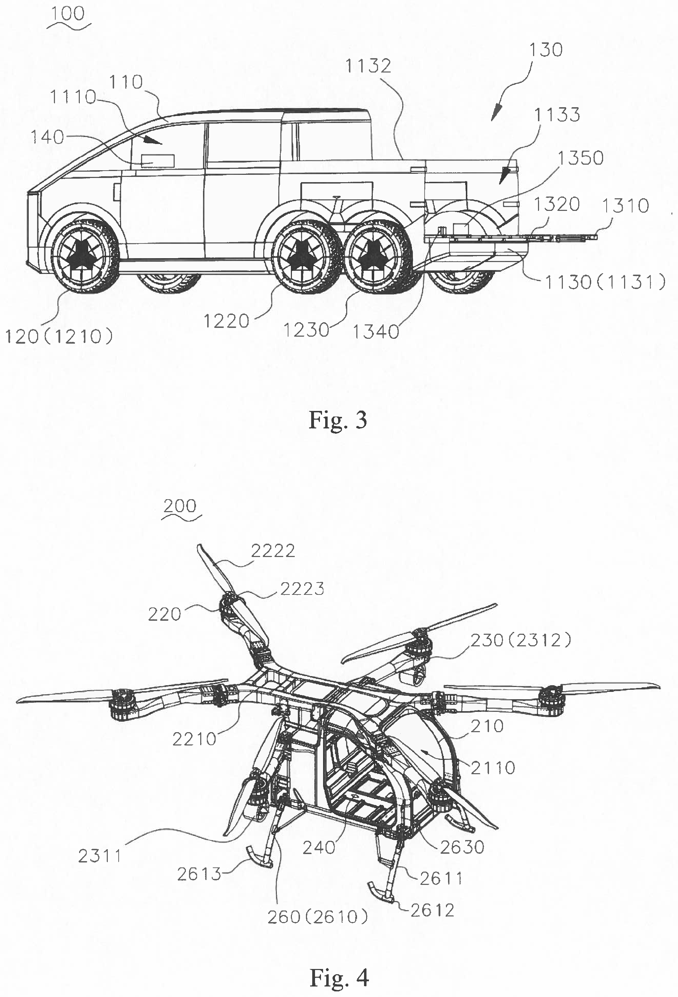

Referring to Fig. 3, in the embodiments of the present application, the automobile 100 is configured to travel on the ground so that the flying vehicle 1000 has a function of traveling on the ground. The automobile 100 includes an automobile body 110, a plurality of wheel assemblies 120, and a separation and connection device 130. The automobile body 110 is a main structure of the automobile 100, and functions to bear the load of the automobile 100 and other functional devices. The automobile body 110 includes a land cabin 1110 fixedly arranged on the automobile body 110, and a bearing platform 1130 arranged in parallel with the land cabin 1110. It can be understood that the land cabin 1110 is defined and formed by a frame structure of the automobile body 110. Such an arrangement enhances the relevance between the land cabin 1110 and the automobile body 110, and improves the strength of the land cabin 1110 and the safety of the automobile 100. The automobile 100 further includes an automobile rear compartment and an automobile chassis. Both the automobile rear compartment and the land cabin 1110 are arranged on the automobile chassis. The automobile rear compartment is configured to carry equipment and devices such as the aircraft 200. Specifically, the automobile rear compartment includes a rear compartment floor, and the rear compartment floor is configured to support the aircraft 200 and devices and structures required for coupling between aircraft 200 and the automobile 100. The rear compartment floor is not directly used for parking the aircraft 200, so as to avoid damage to the basic structure of the automobile body 110. Therefore, the bearing platform 1130 is arranged on the rear compartment floor. The bearing platform 1130 can be understood as a protective layer of the rear compartment floor, and the bearing platform 1130 is configured to park the aircraft 200. The separation and connection device 130 is arranged on the rear compartment floor, i.e., the bearing platform 1130, and is configured to subsequently dock with and tow the aircraft 200. The plurality of wheel assemblies 120 are arranged on the automobile chassis of the automobile body 110, so that the automobile body 110 can travel on land.

Referring to FIG. 4, in the embodiments of the present application, the aircraft 200 is configured to travel in the air so that the flying vehicle 1000 has a function of traveling in the air. The aircraft 200 and the automobile 100 jointly constitute the flying vehicle 1000 having both land travel and flight functions. The aircraft 200 includes an aircraft body 210 and a plurality of foldable rotors 220 arranged on the aircraft body 210. The aircraft body 210 is a main structure of the aircraft 200, and a flight cabin 2110 is arranged on the aircraft body 210 for people to ride. The plurality of foldable rotors 220 are arranged on the aircraft body 210 and configured to provide power for the aircraft 200 to travel in the air. Driven by the plurality of foldable rotors 220, the aircraft 200 can ascend into the air and travel. In an embodiment, the aircraft 200 may further include two ducted fans 230 connected to the aircraft body 210. The two ducted fans 230 are configured to provide the aircraft body 210 with a compensating yaw moment when a yaw moment formed by the plurality of foldable rotors 220 is in an unbalanced state.

For a conventional flying vehicle 1000, during the landing process of the aircraft 200, the aircraft 200 is required to directly land vertically on the bearing platform 1130 of the automobile 100. On the one hand, since the size and weight of the aircraft 200 capable of carrying people are relatively large, it is difficult to accurately control the posture and movement state of the aircraft 200. On the other hand, limited by the existing road facilities, the overall size of the flying vehicle 1000 cannot be too large. Therefore, the size of the landing plane provided by the bearing platform 1130 of the automobile 100 is small, making it difficult for the aircraft 200 to land on the bearing platform 1130 in a short time. Even the aircraft 200 lands on the bearing platform 1130, the position of the aircraft 200 cannot meet the coupling requirements. During the adjustment of the relative position between the aircraft 200 and the automobile 100 after the aircraft 200 lands on the bearing platform 1130, it is required to overcome the weight of the aircraft 200, consider whether the structure of the bearing platform 1130 can withstand the repeated deflection and movement of the aircraft 200 on the bearing platform 1130, and avoid structural collision between the aircraft 200 and the automobile 100, which may easily cause damage to a docking structure. Moreover, the control difficulty for the aircraft 200 to adjust its position on the bearing platform 1130 is extremely high, posing a great safety hazard.

In the embodiments of the present application, the arrangement of the separation and connection device 130 provides a new coupling method for the aircraft 200 and the automobile 100. The aircraft 200 is capable of vertically landing on the ground or taking off vertically from the ground, such as in helicopter mode. Specifically, the aircraft 200 first vertically lands on the ground from the air, namely switching from a flight state to a state of being parked on the ground. Subsequently, the automobile 100 travels to the vicinity of the aircraft 200, and is controlled to align with the aircraft 200 in position to drive the separation and connection device 130 to automatically connect to the aircraft body 210, and the aircraft body 210 is driven to move toward the automobile body 110 until the aircraft body 210 is detachably coupled to the automobile 100. When the aircraft 200 needs to take off, the aircraft body 210 is decoupled from the automobile 100 before the aircraft 200 takes off. After decoupling, the aircraft 200 first parks on the ground, and then is started to vertically take off and ascend into the air from the ground, while the automobile 100 remains on the ground. Therefore, in the embodiments of the present application, the aircraft 200 does not need to be accurately positioned relative to the bearing platform 1130, and can quickly land on the ground. Subsequently, the automobile 100 moves to the vicinity of the aircraft 200 and aligns with the aircraft, so that the separation and connection device 130 docks with the aircraft 200 and tows the aircraft 200 to the bearing platform 1130. The control difficulty for coupling the aircraft body 210 to the automobile 100 is relatively low, thereby improving the efficiency of coupling the aircraft body 210 to the bearing platform 1130, and facilitating the adjustment of the relative position between the aircraft 200 and the automobile 100. During the process of coupling the aircraft 200 to the bearing platform 1130 and the process of decoupling, the foldable rotors 220 stop rotating, thereby improving the safety of the flying vehicle 1000 during use. In an embodiment, when the aircraft 200 parks on the ground, the rotors 220 are folded before being coupled to the automobile 100.

In this embodiment, the degree of enclosure of the aircraft 200 by the automobile rear compartment of the automobile body 110 after the aircraft 200 is coupled to the automobile 100 is not limited. The aircraft 200 may be semi-enclosed or fully enclosed. In this embodiment, the automobile 100 capable of semi-enclosing the aircraft 200 has a shape similar to conventional pickup trucks. Specifically, the automobile rear compartment includes a fence structure 1132, and the bearing platform 1130 includes a bearing plate 1131 connected to the land cabin 1110. The fence structure 1132 is arranged around the periphery of the bearing plate 1131, and can stop the aircraft 200 from leaving the bearing plate 1131 in a horizontal direction when the aircraft 200 is coupled to the bearing platform 1130. The fence structure 1132 and the bearing plate 1131 jointly define a first accommodating space 1133 in communication with the outside. To allow the aircraft 200 to enter and exit the first accommodating space 1133, the fence structure 1132 includes a movable fence (not shown). The movable fence is arranged on a side of the bearing plate 1131 facing away from the land cabin 1110, and can rotate relative to the bearing plate 1131 to provide a passage for the aircraft body 210 to enter and exit the first accommodating space 1133.

In this embodiment, the automobile 100 capable of fully enclosing the aircraft 200 has a shape similar to conventional box trucks. Specifically, the bearing platform includes a bearing plate 1131 connected to the land cabin 1110. The automobile rear compartment covers the bearing plate 1131. The automobile rear compartment and the bearing plate 1131 jointly define a second accommodating space (not shown) isolated from the outside. To allow the aircraft 200 to enter and exit the second accommodating space, the automobile rear compartment includes a compartment door movably arranged on a side of the automobile rear compartment facing away from the land cabin 1110. The compartment door is configured to open the automobile rear compartment to avoid the aircraft body 210.

In this embodiment, the automobile 100 further includes an automobile control system 140 configured to control the wheel assemblies 120. The wheel assemblies 120 can change the motion state of the automobile body 110 under automobile motion commands from the automobile control system 140, such as acceleration, deceleration, forward movement, reverse movement. Similarly, the aircraft 200 further includes a flight control system 240 configured to control the foldable rotors 220. The foldable rotors 220 can change the motion state of the aircraft body 210 under aircraft motion commands from the flight control system 240, such as takeoff, landing, yaw, and hovering.

Referring to Figs. 3 and 4, in this embodiment, the automobile control system 140 is arranged inside the land cabin 1110, which can be understood as a passenger space and a driving space. A driver can operate the automobile control system 140 in the land cabin 1110 to drive the automobile 100. The automobile control system 140 may include one or more structures such as a dashboard, a steering wheel, an accelerator, a brake, and a gear lever. The flight control system 240 is arranged inside the flight cabin 2110, and includes one or more structures such as a flight dashboard, a central console, and a flight control stick. In some embodiments, the automobile control system 140 and the flight control system 240 can be communicatively connected to transmit motion data or motion state information of the automobile 100 and the aircraft 200 to each other. In still other embodiments, since the automobile 100 is an autonomous transport device, the position of the automobile control system 140 is not specifically limited. The automobile control system 140 may be arranged on the automobile body 110 at a position other than the land cabin 1110, or may be arranged inside the land cabin 1110 for an onboard operator to assist in driving the automobile 100. If the aircraft 200 is also an autonomous transport device, the aircraft 200 is arranged similarly to the automobile 100, which will not be repeated here.

Next, specific docking and coupling structures of the automobile 100 and the aircraft 200 will be described, as well as how they achieve docking and coupling therebetween.

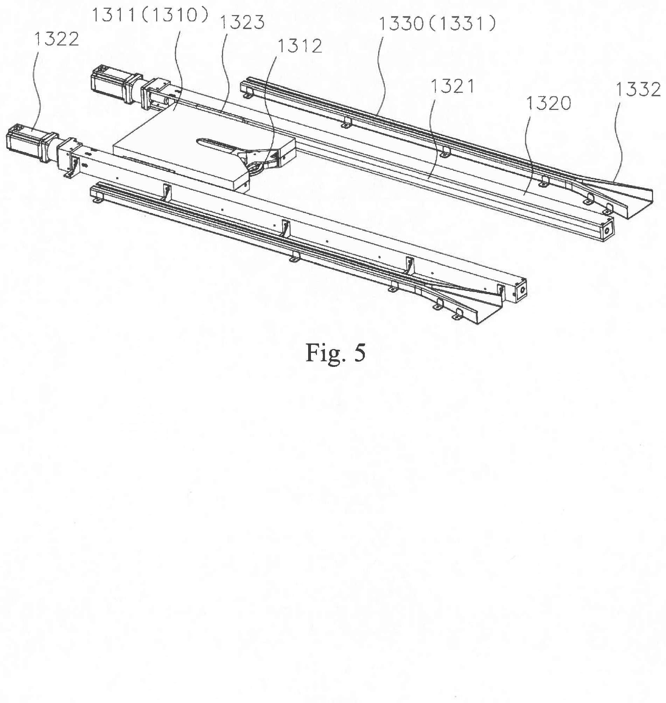

Referring to Fig. 5, in this embodiment, the separation and connection device 130 includes a traction mechanism 1310. The traction mechanism 1310 is movably arranged on the bearing platform 1130. When the automobile 100 controls the bearing platform 1130 to align with the aircraft body 210, the traction mechanism 1310 tends to move toward or away from the aircraft body 210. Correspondingly, the aircraft 200 further includes a docking mechanism 250 connected to the aircraft body 210 (see Fig. 2), and the docking mechanism 250 is adapted to engage and connect the traction mechanism 1310. After the traction mechanism 1310 is fitted and connected with the docking mechanism 250, the traction mechanism 1310 pulls the docking mechanism 250 to tow the aircraft 200 onto the bearing platform 1130. The engagement between the traction mechanism 1310 and the docking mechanism 250 may be accomplished manually, or by automatic equipment, or by both manual operation and automatic equipment.

The structural basis for the traction mechanism 1310 to be movable in a fixed direction is linear motion mechanisms 1320. The linear motion mechanisms 1320 are arranged on the bearing platform 1130, and the traction mechanism 1310 is connected to the linear motion mechanisms 1320. The linear motion mechanisms 1320 are configured to drive the traction mechanism 1310 to move on the bearing platform.

Referring to Fig. 5, the specific components of the linear motion mechanisms 1320 will first be described to illustrate the mechanism by which the linear motion mechanisms 1320 drive the traction mechanism 1310 to move. Specifically, each linear motion mechanism 1320 includes a lead screw 1321, a rotating motor 1322 and a slider 1323; the lead screw 1321 is arranged in a forward direction of the automobile 100; the rotating motor 1322 is drivingly connected to one end of the lead screw 1321; and when activated, the rotating motor 1322 can drive the lead screw 1321 to rotate. The slider 1323 is threadedly connected to the lead screw 1321 and is connected to the traction mechanism 1310. When the bearing platform 1130 moves to a position aligned with the aircraft body 210, the lead screws 1321 rotate, and the sliders 1323 move together with the traction mechanism 1310 toward or away from the aircraft body 210 relative to the bearing platform 1130. In this embodiment, the number of linear motion mechanisms 1320 is two. The two linear motion mechanisms 1320 and the traction mechanism 1310 are arranged in a horizontal direction, so as to avoid increasing the height of the bearing platform 1130 and prevent the overall structure of the flying vehicle 1000 from being too high. If the overall structure of the flying vehicle 1000 is too high, the flying vehicle 1000 may be incompatible with existing transportation facilities and building structures, such as the size of existing parking spaces and the height design of underground parking garages. The two linear motion mechanisms 1320 are arranged on two opposite sides of the traction mechanism 1310. Such an arrangement provides, on the one hand, a larger driving force acting on the traction mechanism 1310, and on the other hand maintains the traction mechanism 1310 in a substantially balanced state so that the traction mechanism 1310 is less prone to tilting or deflection, thereby ensuring the traction effect.

Referring to Fig. 5, the specific structure of the traction mechanism 1310 and the specific structure of the docking mechanism 250 of the aircraft 200 will be described next. Specifically, the traction mechanism 1310 includes a traction main body 1311 and a traction ring 1312. Correspondingly, the docking mechanism 250 of the aircraft 200 includes a mating ring (not shown). The traction ring 1312 is arranged on a side of the traction main body 1311 facing away from the land cabin 1110, such that when the bearing platform 1130 moves to a position aligned with the aircraft body 210, the traction ring 1312 and the mating ring are arranged opposite to each other and can be engaged with each other. In some other embodiments, the traction mechanism 1310 and the docking mechanism 250 may also be hook-shaped structures.

To engage the traction ring 1312 with the mating ring, in this embodiment the traction ring 1312 is partially exposed on the side of the traction main body 1311 facing away from the land cabin 1110. The traction ring 1312 is provided with a notch, is rotatably arranged on the traction main body 1311 and is rotatable about the axis thereof. In a state where the traction ring 1312 is arranged opposite the mating ring, the traction ring 1312 can rotate to align the notch with the mating ring, so that the mating ring and the traction ring 1312 can be engaged with each other. The traction ring 1312 then continues to rotate to hide the notch inside the traction main body 1311, ensuring the stability of the engagement relationship between the mating ring and the traction ring 1312.

Referring to Fig. 5, after the aircraft 200 is towed onto the bearing platform 1130 and before the aircraft body 210 is coupled to the bearing platform 1130, the movement direction of the aircraft body 200 is preferably kept in a straight line relative to the automobile body 110. Therefore, the separation and connection device 130 in this embodiment further includes two guide grooves 1330. The two guide grooves 1330 are both horizontally arranged on the bearing platform 1130, and extend in the forward direction of the automobile 100. Correspondingly, mating wheel assemblies (not shown) are arranged on two opposite sides of the bottom of the aircraft body 210. When the bearing platform 1130 moves to a position aligned with the aircraft body 210, the two guide grooves 1330 are arranged opposite to the two mating wheel assemblies in one-to-one correspondence, and each mating wheel assembly can slide into a corresponding guide groove 1330 and roll within the guide groove 1330, so as to restrict the movement trajectory of the aircraft body 210.

Referring to Fig. 5, to facilitate the sliding of the mating wheel assemblies into the corresponding guide grooves 1330, each guide groove 1330 in this embodiment includes a first groove 1331 and a second groove 1332 that are in communication. The second groove 1332 is connected to an end of the first groove 1331 facing away from the land cabin 1110. The groove width of the second groove 1332 gradually increases in a direction away from the land cabin 1110; that is, the end of the second groove 1332 close to the corresponding mating wheel assembly has a larger groove width, allowing the mating wheel assembly to smoothly slide into the second groove 1332.

After the mating wheel assemblies slide into the guide grooves 1330, if the traction mechanism 1310 tows the aircraft body 210 to move in a straight line while the movement direction of the mating wheel assemblies is inconsistent with the extending direction of the guide grooves 1330, the mating wheel assemblies may become stuck in the guide grooves 1330. Therefore, in this embodiment, the mating ring is rotatably connected to a side of the chassis of the aircraft body 210 facing the ground, and the mating ring is rotatable relative to the chassis of the aircraft body 210 along a vertical line. During the process of the traction ring 1312 towing the aircraft body 210, the movement direction of the mating wheel assemblies is adjusted by means of the mating ring, so that the mating wheel assemblies come into smooth fit with the guide grooves 1330.

Referring to Fig. 3, in this embodiment, the separation and connection device 130 further includes a limiting mechanism 1340. The limiting mechanism 1340 is applied in the following scenario: when the aircraft body 210 is coupled with the bearing platform 1130, the limiting mechanism 1340 is connected between the aircraft body 210 and the bearing platform 1130 to limit the movement of the aircraft body 210 relative to the bearing platform 1130 in any direction. Specifically, the limiting mechanism 1340 in this embodiment includes a horizontal limiting assembly (not shown). The horizontal limiting assembly may be connected between the bearing platform 1130 and the aircraft body 210, or between the automobile body 110 and the aircraft body 210. The horizontal limiting assembly is configured to limit horizontal movement of the aircraft body 210 relative to the bearing platform 1130, such as limiting longitudinal shaking and lateral swinging of the aircraft body 210 in the forward direction of the automobile body 110. The limiting mechanism 1340 in this embodiment further includes a vertical limiting assembly (not shown). The vertical limiting assembly is connected between the bearing platform 1130 and the aircraft body 210, and is configured to limit vertical movement of the aircraft body 210 relative to the bearing platform 1130. The arrangement of the limiting mechanism 1340 stabilizes the position state of the aircraft body 210 on the bearing platform 1130 and ensures the stability of the fixed connection between the aircraft body 210 and the bearing platform 1130. By limiting the movement of the aircraft body 210 on the bearing platform 1130, the limiting mechanism 1340 can reduce impact damage to the aircraft 200 itself and the automobile 100 caused by movement of the aircraft body 210.

This embodiment does not limit the type and specific structure of the horizontal limiting assembly and the vertical limiting assembly, which may be hook-and-ring structures in mating connection, or blocking members for limiting movement. In an embodiment, an electric limiting mechanism 1340 may be used. When the aircraft body 210 is coupled with the bearing platform 1130, the electric limiting mechanism is connected to the aircraft body 210 to limit the movement of the aircraft body 210. Before the aircraft body 210 takes off, the electric limiting mechanism decouple the bearing platform 1130 or the automobile body 110 from the aircraft body 210.

Referring to Fig. 3, to reduce damage to the aircraft 200 itself and the automobile 100 caused by vibration of the aircraft body 210, the separation and connection device 130 in this embodiment further includes a buffer mechanism 1350. The buffer mechanism 1350 is arranged on the bearing platform 1130. When the aircraft body 210 is coupled with the bearing platform 1130, the buffer mechanism 1350 is located between the aircraft body 210 and the bearing platform 1130, as well as between the aircraft body 210 and the automobile body 110. The buffer mechanism 1350 can mitigate impact damage to the automobile body 110 and the aircraft body 210 caused by shaking of the aircraft body 210. This embodiment does not specifically limit the type and specific structure of the buffer mechanism 1350, which may be a damper or a hydraulic buffer. Typically, the separation and connection device 130 includes multiple operation modes during manipulation, such as fully automatic, manual, or semi-automatic modes. For example, the separation and connection device 130 may adopt a fully automatic operation mode to realize automatic coupling and separation between the aircraft 200 and the automobile 100.

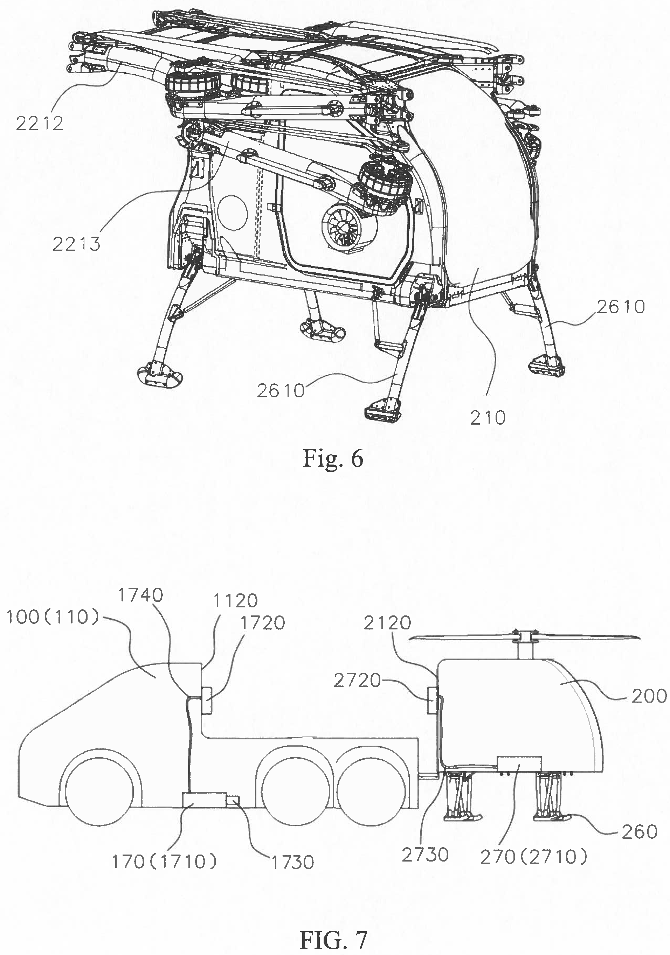

Referring to Figs. 4 and 6, the aircraft 200 in this embodiment further includes landing gear mechanisms 260, which are configured to support the aircraft body 210 when the aircraft 200 is in a parked state. The landing gear mechanisms 260 are rotatably connected to the aircraft body 210. When the aircraft 200 is in a flight state, the landing gear mechanisms 260 rotate in a direction close to the aircraft body 210 to assume a folded state, thereby reducing the resistance applied to the aircraft body 210 in the air. When the aircraft 200 is about to land on the ground, the landing gear mechanisms 260 can rotate relative to the aircraft body 210 to assume a supporting state and can be supported on the ground. In other embodiments, structures such as airbags or support blocks may also be used to realize parking and landing of the aircraft body 210.

Referring to Fig. 7, in order to keep the left and right sides of the aircraft body 210 relatively balanced in the forward direction of the aircraft 200 when the aircraft body 210 is in a parked state, each landing gear mechanism 260 in this embodiment includes two landing gears 2610 which are respectively rotatably connected to the left and right sides of the aircraft body 210. Each landing gear 2610 can rotate relative to the aircraft body 210 to deploy or fold. In other embodiments, the landing gear mechanisms 260 may be in the form of integrated structures. When the aircraft 200 is in a parked state, the landing gear mechanisms 260 in the form of integrated structures can simultaneously support the left and right sides of the aircraft body 210.

Referring to Fig. 4, in order to ensure the automatic deployment and folding of the landing gears 2610, each landing gear mechanism in this embodiment further includes at least two driving members 2630. The two driving members 2630 are arranged in one-to-one correspondence with the two landing gears 2610, and each driving member 2630 connects the aircraft body 210 and a corresponding landing gear 2610. The driving members 2630 can automatically drive the landing gears 2610 to rotate relative to the aircraft body 210 according to the travel state of the aircraft 200, so that the landing gears 2610 assume a folded state or a deployed state relative to the aircraft body 210 without manual intervention, thereby improving safety. The driving members 2630 in this embodiment may be hydraulic cylinders, linear motors, or other devices.

Referring to Fig. 4, each landing gear 2610 in this embodiment includes a support rod 2611 and a support foot 2612, and the support rod 2611 is connected between the support foot 2612 and the aircraft body 210. When the landing gear mechanism 260 is in a supporting state, the support feet 2612 abut against the ground and support the aircraft body 210 upward. Each support foot 2612 is in the form of a rod-shaped structure and extends substantially in the forward direction of the aircraft 200. At least one of the front end and the rear end of each support foot 2612 in the forward direction of the aircraft 200 is tilted away from the ground. The tilted portion forms a curved edge 2613 on the side of the support foot 2612 facing the ground. During landing of the aircraft 200 on the ground, the support feet 2612 can be fitted with the ground by means of the curved edge 2613, and can avoid relatively violent collision between foreign objects on the ground and the support feet 2612, thereby preventing abnormal vibration of the aircraft body 210 and damage to the support feet 2612 and the aircraft body 210.

After the traction mechanism 1310 on the bearing platform 1130 is docked with the docking mechanism 250 on the aircraft body 210, the traction mechanism 1310 tows the aircraft body 210 to move toward the bearing platform 1130 until the aircraft body 210 is coupled to the bearing platform 1130. Therefore, the process from the aircraft body 210 being independent of the bearing platform 1130 to being coupled to the bearing platform 1130 progresses step by step. Before most of the aircraft body 210 moves onto the bearing platform 1130, or in other words, before the center of gravity of the aircraft body 210 moves to a safe position on the bearing platform 1130, the landing gear mechanisms 260 still need to be arranged between the aircraft body 210 and the ground to maintain the balance of the aircraft body 210 and the balance of the automobile 100. In this embodiment, the aircraft 200 includes at least two landing gear mechanisms 260. The two landing gear mechanisms 260 are arranged at intervals on the aircraft body 210 one after the other in the forward direction of the aircraft 200. One of the two landing gear mechanisms 260 is close to the bearing platform 1130 and the other is away from the bearing platform 1130. That is, one of the two landing gear mechanisms 260 is located at the front end of the aircraft body 210 and the other is located at the rear end of the aircraft body 210. Each landing gear mechanism 260 may include two landing gears 2610, and the two landing gears 2610 therein are respectively located on the left and right sides of the aircraft body 210. It should be understood that in other embodiments, more landing gear mechanisms 260 may be provided on the basis of the weight and length of the aircraft body 210.

In this embodiment, during the process from the aircraft body 210 being independent of the bearing platform 1130 to being coupled to the bearing platform 1130, the two landing gear mechanisms 260 are folded sequentially. The folding time nodes of the two landing gear mechanisms 260 will be described in detail below.

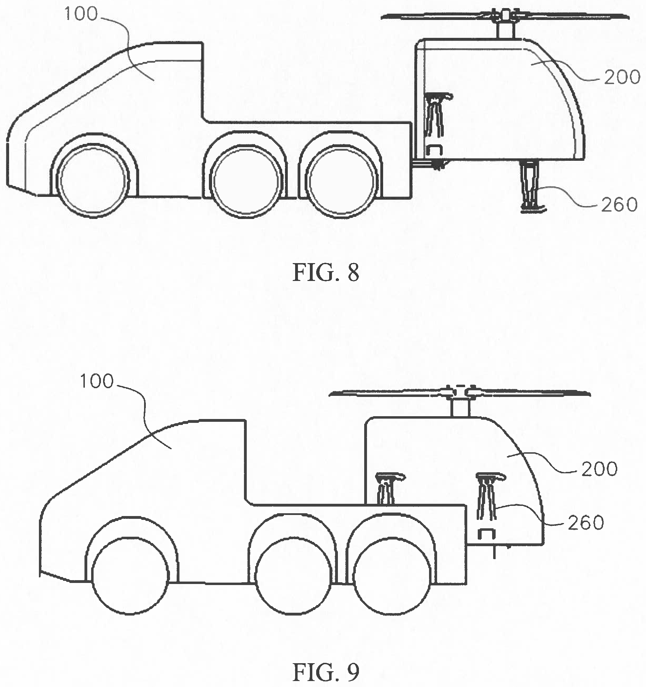

Referring to Figs. 7 and 8, initially, the two landing gear mechanisms 260 are in a supporting state. The aircraft 200 lands on the ground, with the plurality of foldable rotors 220 in a folded state (for ease of illustrating the structure of the foldable rotors 220, the rotors are shown in a deployed state in the figures). Under the traction of the traction mechanism 1310, a small part of the aircraft body 210 moves onto the bearing platform 1130 and is supported by the bearing platform 1130. When the bearing platform 1130 and the landing gear mechanism 260 away from the bearing platform 1130 can bear the weight of the aircraft body 210 and maintain the aircraft body 210 in a balanced state, the landing gear mechanism 260 adjacent to the bearing platform 1130 folds and retracts to switch to a folded state.

Referring to Fig. 9, the traction mechanism 1310 continues to tow the aircraft body 210 toward the bearing platform 1130. When most of the structure of the aircraft body 210 moves onto the bearing platform 1130, and the center of gravity of the aircraft body 210 is balanced by the bearing platform 1130 and the automobile body 110 (in other words, when the bearing platform 1130 can independently support the aircraft body 210 without assistance from the landing gear mechanism 260 away from the bearing platform 1130), the landing gear mechanism 260 away from the bearing platform 1130 folds and retracts to switch to a folded state.

Finally, the traction mechanism 1310 continues to tow the aircraft body 210 toward the bearing platform 1130 until the aircraft body 210 moves to a predetermined coupling position on the bearing platform 1130, and then the aircraft body 210 is coupled with the bearing platform 1130.

Referring again to Fig. 7, the automobile 100 in this embodiment is a pure electric automobile. The automobile 100 further includes an automobile electrical system 170, which is arranged on the automobile body 110. The automobile electrical system 170 is electrically connected to the plurality of wheel assemblies 120 to supply electric power thereto, so that the wheel assemblies 120 can drive the automobile body 110 to travel on land. In other embodiments, the automobile 100 may also be an extended-range electric automobile; that is, in addition to the automobile electrical system 170, the automobile 100 further includes a fuel generator. In an embodiment, the aircraft 200 in this embodiment is a pure electric aircraft. The aircraft 200 further includes a flight electrical system 270, which is arranged on the aircraft body 210. The flight electrical system 270 is electrically connected to the plurality of foldable rotors 220 to supply electric power thereto, so that the foldable rotors 220 can drive the aircraft body 210 to fly in the air.

Specifically, in this embodiment, the automobile electrical system 170 includes a first power battery pack 1710, which is arranged on the automobile body 110 and configured to store electric power for supplying a land power system and other electrical components on the automobile 100. The flight electrical system 270 includes a second power battery pack 2710, which is arranged on the aircraft body 210 and configured to store electric power for supplying the foldable rotors 220 and other electrical components on the aircraft 200. This embodiment does not limit the types of the first power battery pack 1710 and the second power battery pack 2710, which may be acid lithium batteries or alkaline zinc-manganese batteries.

In some embodiments, when the aircraft body 210 is coupled to the automobile 100, the automobile electrical system 170 and the flight electrical system 270 are electrically connected to allow the transmission of electric power between the automobile 100 and the aircraft 200. Specifically, the automobile electrical system 170 further includes a first high-voltage wire harness 1740 and a first connector 1720, and the first connector 1720 is electrically connected to the first power battery pack 1710 by means of the first high-voltage wire harness 1740. The flight electrical system 270 further includes a second high-voltage wire harness 2730 and a second connector 2720, and the second connector 2720 is electrically connected to the second power battery pack 2710 by means of the second high-voltage wire harness 2730. When the aircraft body 210 is coupled with the bearing platform 1130, the first connector 1720 and the second connector 2720 are electrically connected to allow the transmission of electric power between the automobile 100 and the aircraft 200. Specifically, the automobile 100 supplies power to the aircraft 200 unidirectionally, the aircraft 200 supplies power to the automobile 100 unidirectionally, or the automobile 100 and the aircraft 200 supply power to each other. In addition, each of the first power battery pack 1710 and the second power battery pack 2710 in this embodiment is provided with a power connection port for receiving power supplement from an external power supply of the transport carrier. Supplying power to the aircraft 200 by the automobile 100 enables multiple flights of the aircraft 200, and solves the problem of relatively short cruising range of known pure electric aircraft to a certain extent. Moreover, supplying power to the automobile 100 by the aircraft 200 can increase the driving range of the automobile 100 in emergency situations, thereby alleviating user range anxiety.

In another embodiment, when separated from each other, the automobile 100 and the aircraft 200 may also be electrically connected by a cable to realize the transmission of electric power.

A case where the automobile 100 supplies electric power to the aircraft 200 is described first. After the aircraft 200 finishes a flight and is coupled to the bearing platform 1130, the first connector 1720 to which the first power battery pack 1710 is connected can supply electric power to the second power battery pack 2710 via the second connector 2720, so that the flight electrical system 270 stores sufficient electric power for the next flight of the aircraft 200. Specifically, the automobile electrical system 170 further includes an energy management module 1730 electrically connected to the first power battery pack 1710. When detecting that the aircraft body 210 is coupled with the bearing platform 1130, the energy management module 1730 can control the first power battery pack 1710 to supply electric power to the second power battery pack 2710.

Next, a case where the second power battery pack 2710 supplies electric power to the first power battery pack 1710 will be described. The flying vehicle 1000 in this embodiment further includes a power sensor (not shown) and an automobile controller (not shown). The power sensor is electrically connected to the automobile controller. The power sensor is configured to detect the remaining power in the first power battery pack 1710 and the second power battery pack 2710, and the automobile controller is configured to control whether the second power battery pack 2710 transmits electric power to the first power battery pack 1710. When the automobile 100 is coupled with the aircraft 200 and the automobile 100 is traveling, if the power sensor detects that the remaining power in the first power battery pack 1710 is low, the automobile controller controls the second power battery pack 2710 to transmit electric power to the first power battery pack 1710. This embodiment specifically describes two specific scenarios in which the first power battery pack 1710 has insufficient power.

In the first scenario, the power sensor detects the remaining power in the first power battery pack 1710, and the automobile controller estimates the cruising range of the automobile 100 on the basis of the remaining power of the first power battery pack 1710. When the cruising range of the automobile 100 is lower than a target cruising range, it indicates that the electric power in the first power battery pack 1710 is insufficient to support the flying vehicle 1000 in traveling to a target location. In the above situation, it may be determined that the remaining power in the first power battery pack 1710 is insufficient. Then, the power sensor detects the remaining power in the second power battery pack 2710. If the remaining power in the second power battery pack 2710 is greater than or equal to a second preset power level (in other words, when the electric power in the second power battery pack 2710 is sufficient), the automobile controller controls the second power battery pack 2710 to supply electric power to the first power battery pack 1710.

In the second scenario, the flying vehicle 1000 in this embodiment further includes an acceleration sensor (not shown) which is configured to detect the actual acceleration of the automobile 100. When the actual acceleration of the automobile 100 is less than or equal to a preset acceleration, it indicates that the remaining power in the first power battery pack 1710 is insufficient to enable the automobile 100 to reach a preset traveling speed within a preset time. Then, the power sensor detects the remaining power in the second power battery pack 2710. If the remaining power in the second power battery pack 2710 is greater than or equal to the second preset power level (in other words, when the electric power in the second power battery pack 2710 is sufficient), the automobile controller controls the second power battery pack 2710 to supply electric power to the first power battery pack 1710.

Referring to Fig. 7, the automobile body 110 in this embodiment has a first back plate 1120 facing the aircraft body 210. In other words, the first back plate 1120 is arranged facing the bearing platform 1130. The first connector 1720 is arranged on the first back plate 1120 so as to be correspondingly matched with the bearing platform 1130 and the aircraft body 210. Correspondingly, the aircraft body 210 has a second back plate 2120 facing the automobile body 110, and the second connector 2720 is arranged on the second back plate 2120 so as to be correspondingly matched with the automobile body 110. When the aircraft body 210 is coupled with the bearing platform 1130, the first back plate 1120 and the second back plate 2120 are arranged opposite to each other, and the first connector 1720 and the second connector 2720 are also arranged opposite to each other and electrically connected, so as to realize the mutual transmission of electric power between the first power battery pack 1710 and the second power battery pack 2710.

Referring again to Fig. 3, the plurality of wheel assemblies 120 in this embodiment include a first wheel assembly 1210, a second wheel assembly 1220, a third wheel assembly 1230, and an automobile drive motor. The first wheel assembly 1210, the second wheel assembly 1220, and the third wheel assembly 1230 are all arranged on a side of the automobile body 110 facing the ground, and at least one of the first wheel assembly 1210, the second wheel assembly 1220, and the third wheel assembly 1230 is driven by the automobile drive motor. In some embodiments, the number of wheel assemblies 120 may also be four, six, or the like. The number of wheel assemblies 120 is comprehensively determined based on the overall weight of the flying vehicle 1000 and the bearing capacity of the wheel assemblies 120. In the embodiments of the present application, each wheel assembly 120 refers to a wheel set sharing a single wheel axle. Each wheel assembly 120 may include a plurality of wheels, for example, two wheels or four wheels or the like. The wheels in each wheel assembly 120 are symmetrically arranged at opposite ends of the same wheel axle.

In this embodiment, the positions and distribution of the wheel assemblies 120 are set according to the weight borne by each part of the automobile 100 when the aircraft 200 is coupled with the automobile 100. Specifically, the first wheel assembly 1210 is arranged corresponding to the ground cabin 1110 of the automobile body 110 (i.e., the manned portion of the automobile body 110) to support the ground cabin 1110. The second wheel assembly 1220 and the third wheel assembly 1230 are arranged corresponding to the bearing platform 1130 (i.e., the rear automobile compartment, the load-bearing portion of the automobile body 110) to support the bearing platform 1130. In other embodiments, the first wheel assembly 1210, the second wheel assembly 1220, and the third wheel assembly 1230 may be arranged at equal intervals at the bottom of the automobile body 110.

Referring again to Fig. 4, the aircraft 200 in this embodiment further includes a frame 2210. The frame 2210 is arranged on the aircraft body 210 and serves as a connecting medium between the aircraft body 210 and the plurality of foldable rotors 220. The plurality of foldable rotors 220 are arranged on the frame 2210. The foldable rotors 220 are configured to provide lift, thrust, yaw moment, and the like to the aircraft body 210, so that the aircraft body 210 can perform actions such as takeoff, landing, forward movement, and yaw. In this embodiment, the foldable rotors 220 are those with the same output power. The use of multiple foldable rotors 220 with the same rated output power imposes relatively low requirements on the overall structure of the aircraft 200, thereby reducing the complexity of the overall structure of the aircraft 200 and lowering the development cost of the aircraft 200. In some other embodiments, the plurality of foldable rotors 220 may be a combination of foldable rotors 220 with multiple rated output powers. In this way, flight modes with stronger functionality can be developed. For example, in such flight modes, the aircraft 200 can fly in harsh environments and weather conditions. The adaptability of the aircraft 200 to flight environments is improved, thereby endowing the aircraft 200 with better market competitiveness.

In this embodiment, the foldable rotors 220 maintain a stable state relative to the structure of the aircraft body 210, thereby simplifying the mounting structure of the foldable rotors 220. The positions of the foldable rotors 220 being fixed are specifically embodied as follows: each foldable rotor 220 has a rotation axis, which is the rotation axis of the rotor blades of the foldable rotor 220. In a flight state, since the positions of rotation axes of the foldable rotors 220 relative to the aircraft body 210 are always fixed, the foldable rotors 220 may also be referred to as non-tilting rotors.

In the level flight state of the aircraft 200, the included angle between the rotation axis of each foldable rotor 220 and a vertical plane is generally less than or equal to 10° in this embodiment. The arrangements of the plurality of foldable rotors 220 are not completely identical. For ease of understanding, the range of the included angle of the rotation axis of each foldable rotor will be described in detail in some specific usage scenarios hereinafter, and will not be elaborated here.

In order to improve the ability of the aircraft 200 to respond to emergencies during a flight and enhance the flight safety of the aircraft 200, this embodiment provides specific arrangements in terms of the number of foldable rotors 220, the distribution of the foldable rotors 220 on the aircraft body 210, the structure of the foldable rotors 220, and the compensation mechanism for abnormalities of the foldable rotors 220, which will be described in detail below.

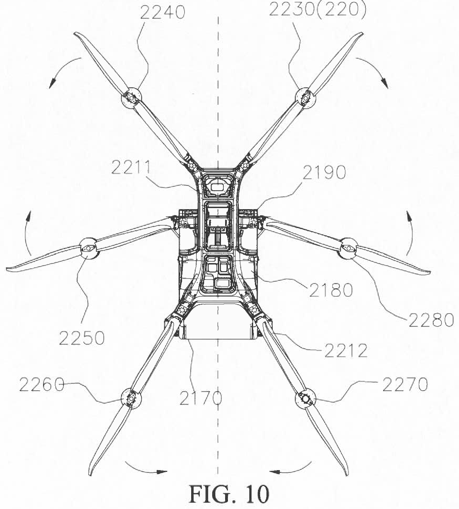

Referring to Fig. 10, in this embodiment, among the vertical planes defined by the forward direction of the aircraft body 210, there is one vertical plane serving as the central axis plane of the aircraft body 210. The aircraft body 210 is symmetrical about the central axis plane, and the two sides of the aircraft body 210 in the forward direction thereof are defined as the left and right sides of the aircraft body 210. The weights of the left and right sides of the aircraft body 210 are substantially the same or different slightly, so that the left and right portions of the aircraft body 210 are basically in a balanced state. In this embodiment, the number of foldable rotors 220 is set to an even number, and the plurality of foldable rotors 220 can be evenly distributed on the left and right sides of the aircraft body 210. That is, the number of foldable rotors 220 on the left side of the aircraft body 210 is the same as that on the right side of the aircraft body 210, so that the driving forces acting on the left and right sides of the aircraft body 210 are also substantially the same. In other embodiments, corresponding arrangements may be made based on the structural characteristics of the aircraft body 210. For example, if the aircraft 200 is a fuel-powered or extended-range aircraft, the number and distribution of the foldable rotors 220 on the left and right sides of the aircraft body 210 may be determined based on the specific position of an oil storage device on the aircraft 200 and the influence of weight changes of the oil storage device on the center of gravity of the aircraft body 210 during flight.

The specific number of foldable rotors 220 is determined and set based on factors such as the weight of the aircraft body 210 and the output power of the foldable rotors 220 under actual conditions. In a conventional multi-rotor manned aircraft, if six rotors are provided, the arrangement thereof is relatively easy. However, if one of the six rotors malfunctions, yaw runaway may occur. Therefore, eight or more rotors are typically arranged to provide redundant power and overcome the problem of yaw runaway. Nevertheless, the overall dimensions of the flying vehicle 1000 must also be taken into account so that the flying vehicle 1000 adapt to public road conditions and existing parking systems. For instance, when the automobile 100 is coupled with the aircraft 200, the overall structure of the flying vehicle 1000 in this embodiment has a length of no more than 5.9 meters, a height of no more than 2 meters, and a width of no more than 2.2 meters. The arrangement of eight or more rotors makes it difficult to meet the overall dimensional requirements of the flying vehicle 1000. In addition, it will significantly increase the overall weight of the aircraft 200, reduce the lightweight level of the aircraft 200, and shorten the flight duration and range of the aircraft 200.

Accordingly, the present application adopts six foldable rotors 220 as the power system of the aircraft 200. While satisfying the power requirements for flight of the aircraft 200, such an arrangement achieves lightweight design of the aircraft 200, improves the flight endurance of the aircraft 200, and enables the overall dimensions of the flying vehicle 1000 to adapt to public road conditions and existing parking systems when the aircraft 200 is coupled with the automobile 100. When six foldable rotors 220 are provided, a failure of any one foldable rotor 220 may result in yaw runaway of the entire aircraft 200. In another embodiment, two ducted fans 230 are further provided to address this safety issue, overcoming the difficulty that conventional six-rotor manned aircraft lack yaw control capability.

Referring to Fig. 10, three foldable rotors 220 are correspondingly arranged on each of the left and right sides of the aircraft body 210 in the forward direction of the aircraft 200, such that the aircraft 200 is substantially balanced in the lateral direction. In addition, the aircraft body 210 is also substantially balanced in the forward direction of the aircraft. Specifically, the aircraft body 210 in this embodiment includes a first body portion 2170, a second body portion 2180, and a third body portion 2190, which are sequentially arranged side by side and connected in the forward direction of the aircraft 200. The six foldable rotors 220 are divided into three groups, each group including two foldable rotors 220. The three groups of foldable rotors 220 respectively correspond to the first body portion 2170, the second body portion 2180, and the third body portion 2190 in sequence, and bear the weights of the first body portion 2170, the second body portion 2180 and the third body portion 2190 respectively, such that the aircraft body 210 is also substantially balanced in the forward direction of the aircraft 200.

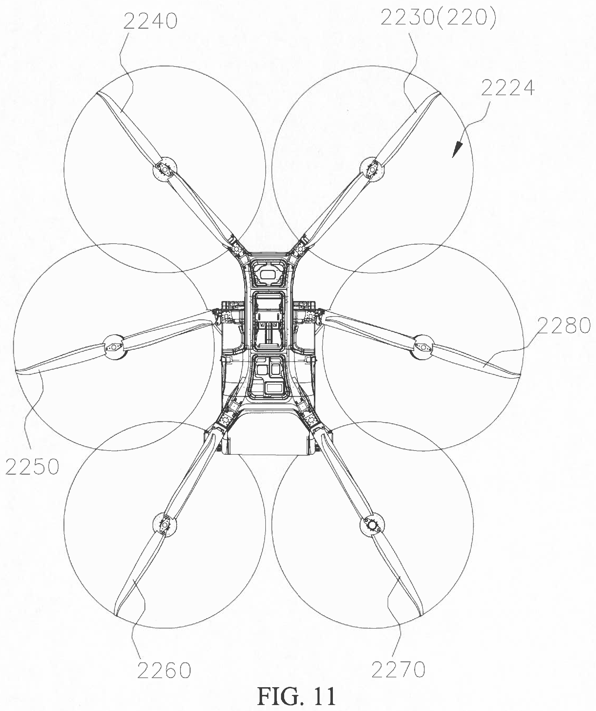

Referring to Fig. 11, in this embodiment, to reserve sufficient operating space for each foldable rotor 220, the plurality of foldable rotors 220 are arranged circumferentially at intervals on the frame 2210. For ease of understanding, when the aircraft 200 is in a level flight state, the aircraft 200 is projected onto a horizontal plane, and the projections of the plurality of foldable rotors 220 are distributed around the periphery of the projection of the aircraft body 210. In this way, the foldable rotors 220 are divergent relative to the aircraft body 210, avoiding structural collision between adjacent or neighboring foldable rotors 220 during rotation, and ensuring high safety of the aircraft 200 during flight. However, to prevent the positions of the plurality of foldable rotors 220 from being excessively divergent, the degree of divergence of the foldable rotors 220 is limited in this embodiment. In this embodiment, with reference to Fig. 11, each foldable rotor 220 forms a rotor revolution plane 2224 during rotation. When the aircraft 200 is in a level flight state, where the aircraft 200 is projected onto a horizontal plane, the projections of the rotor revolution planes 2224 of at least two adjacent foldable rotors 220 partially overlap with each other. This provides a certain integrity and correlation among the foldable rotors 220, and improves the aerodynamic efficiency of the foldable rotors 220.

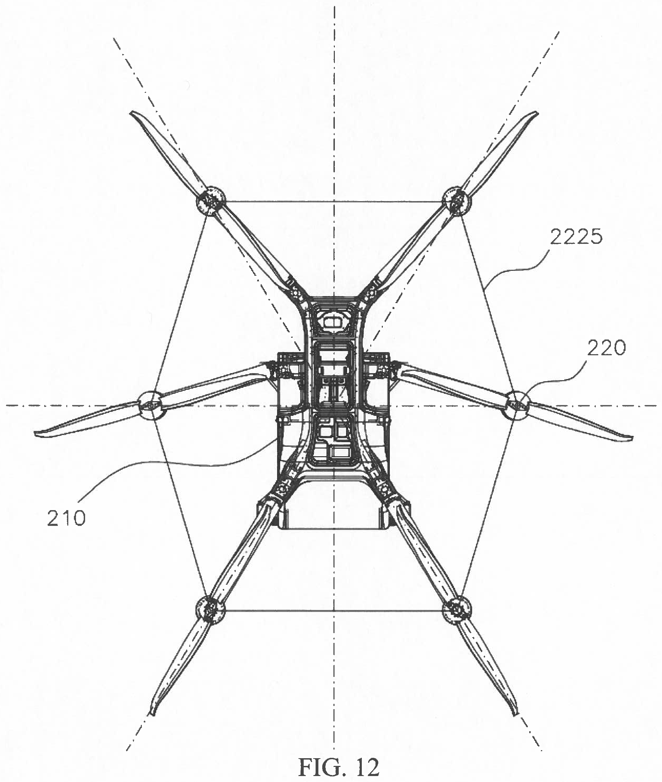

Referring to Fig. 12, the plurality of foldable rotors 220 are arranged in a divergent manner in this embodiment. Lines connecting the center points of the foldable rotors 220 form a polygon 2225. The geometric center of the polygon 2225 is located on the same vertical line as the center of gravity of the aircraft body 210, or a parallel distance between the vertical line passing through the geometric center of the polygon 2225 and the vertical line passing through the center of gravity of the aircraft body 210 is small, so that the aircraft 200 can maintain a balanced and stable state during flight. It should be understood that the polygon 2225 is formed by connecting the center points of the foldable rotors 220 when projected onto a horizontal plane. Further, the plurality of foldable rotors 220 are arranged in central symmetry in this embodiment. It can be understood that the polygon 2225 formed by the foldable rotors 220 is substantially a centrally symmetric figure, such that the driving force formed by any three connected foldable rotors 220 is substantially equal to the driving force formed by the other three connected foldable rotors 220, thereby further improving the balance and safety of the aircraft 200 during flight.

In this embodiment, every two foldable rotors 220 located on the same diagonal of the polygon 2225 constitute a pair of corresponding foldable rotors 220, and the two corresponding foldable rotors 220 are arranged in central symmetry. When the output powers of the two foldable rotors 220 are the same, the two foldable rotors 220 form a balanced external force-moment set relative to the aircraft body 210. In the direction of the line connecting the two foldable rotors 220, the aircraft body 210 can maintain balance under the action of the two foldable rotors 220. Further, in this embodiment, the two foldable rotors 220 that form a corresponding pair are arranged to rotate in opposite directions, so as to generate a yaw moment.

In conventional multi-rotor manned aircraft, fixed wings are extended on two sides of the aircraft in the flight direction thereof to disperse the rotors, and the rotors are arranged on the fixed wings, such that the rotors are arranged around the multi-rotor manned aircraft. However, the fixed wings cannot be folded and occupy a large space. As a result, the multi-rotor manned aircraft cannot be downsized, cannot travel on public roads, and can only take off or land on an airfield, which severely limits the application scope of the multi-rotor manned aircraft.

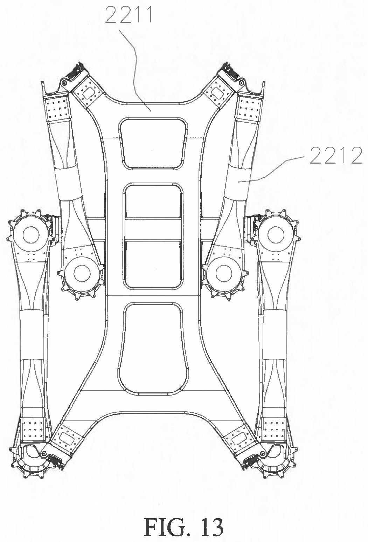

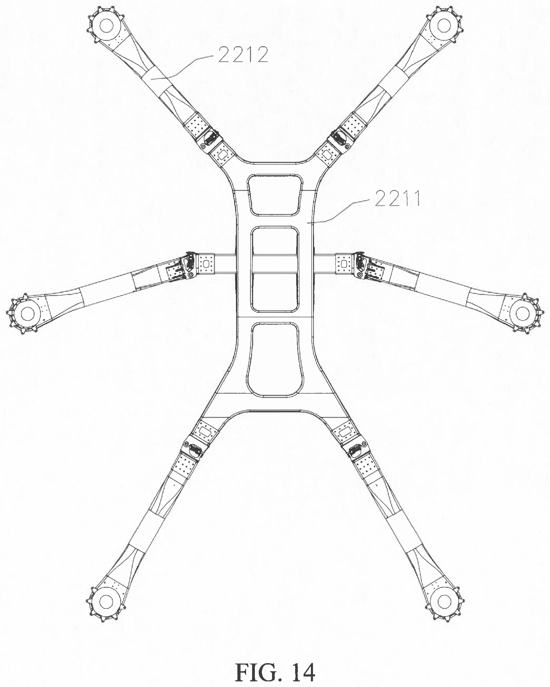

Referring to Figs. 13 and 14, to arrange the foldable rotors 220 divergently relative to the aircraft body 210, the frame 2210 in this embodiment includes a support frame 2211 and a plurality of arms 2212. The support frame 2211 is arranged at the top of the aircraft body 210, and the plurality of arms 2212 are arranged on the support frame 2211. Since the arms 2212 are configured to mount the foldable rotors 220, the number of arms 2212 is consistent with that of foldable rotors 220. For example, in an embodiment, the number of arms 2212 is the same as that of foldable rotors 220, both being six. The six foldable rotors 220 are arranged in one-to-one correspondence with the six arms 2212, and each foldable rotor 220 is mounted on a corresponding arm 2212. The plurality of arms 2212 are sequentially arranged at intervals in a circumferential direction of the support frame. The arms 2212 extend relative to the support frame 2211 in a direction away from the center of the support frame 2211, such that the foldable rotors 220 are connected to the aircraft body 210 in a divergent arrangement. As can be seen from the above description, the support frame 2211 in this embodiment can be understood as an independently structured frame arranged on the top of the aircraft body 210 and the top of the flight cabin 2110. The support frame 2211 may be connected to the top of the aircraft body 210 by welding to enhance the integrity between the aircraft body 210 and the support frame 2211. The support frame 2211 may also be fixedly connected to the aircraft body 210 by means of a fixing assembly (such as threaded fasteners including bolts, or adhesives including structural adhesive), so as to facilitate replacement or maintenance of the support frame 2211.

In other embodiments, the support frame 2211 may serve as a frame structure of the entire aircraft body 210, and the support frame 2211 substantially forms the outer contour of the aircraft body 210. The support frame 2211 is formed by overlapping a plurality of rod-shaped structures and/or column-shaped structures, and is substantially in a cuboid structure. The cuboid structure of the support frame 2211 has an internal space, part or all of which serves as the flight cabin 2110. In this embodiment, the arms 2212 are arranged at the top of the support frame 2211. In other words, the arms are arranged at the top of the flight cabin 2110. The arms 2212 may be integrally formed with the support frame 2211, thereby enhancing the integrity between the arms 2212 and the support frame 2211. The arms 2212 may also be fixedly and detachably connected to the support frame 2211 by means of a connecting structure, thereby ensuring the stable connection relationship between the arms 2212 and the support frame 2211, and facilitating replacement or maintenance of the arms 2212. If the arms 2212 are connected to the support frame 2211 by means of a connecting structure, the arms 2212 may be rotatably connected to the frame 2211. When the aircraft 200 is in a parked state, the arms 2212 can be folded to approach the support frame 2211, so as to reduce the overall size of the aircraft body 210.

In an embodiment, when the plurality of rotors 220 are in a deployed state, the maximum outer diameter of a wing surface of the aircraft 200 is greater than the width of the automobile 100. Before the automobile 100 is coupled with the aircraft 200, the foldable rotors 220 need to be folded, so that the aircraft 200 can be smoothly coupled and fixed to the automobile 100 during the coupling process. Specifically, when the aircraft 200 is in a parked state, the arms 2212 are rotatably connected to the support frame 2211 in this embodiment, so that the foldable rotors 220 can be switched from a divergent state to a gathered state. When the foldable rotors 220 are in the divergent state, the arms 2212 are in an extended state. Each arm 2212 can rotate relative to the support frame 2211 in a direction close to the support frame 2211, so as to be stacked on the outer periphery of the support frame 2211, thereby switching the arms 2212 to a folded state. Correspondingly, the foldable rotors 220 are switched to a gathered state. This can reduce the outer contour of the foldable rotors 220, such that the size of the aircraft 200 matches that of the automobile 100, and the size of the flying vehicle 1000 complies with specifications. Conversely, when the arms 2212 are in the folded state and the foldable rotors 220 are in the gathered state, the arms 2212 can rotate relative to the support frame 2211 to return to the extended state, such that the foldable rotors 220 return to the divergent state to prepare for flight.

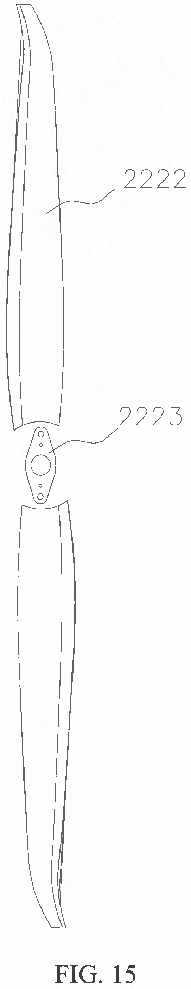

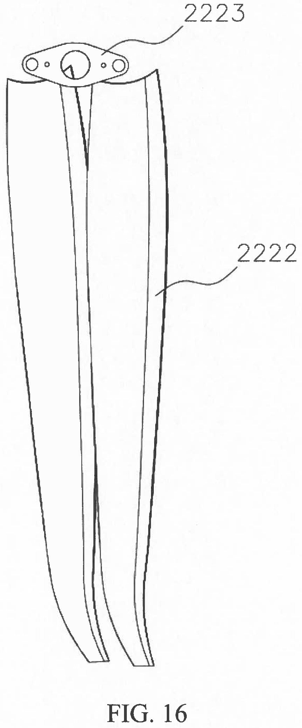

Referring to Figs. 15 and 16, to further reduce the outer contour of the foldable rotors 220 when the aircraft 200 is in the parked state, in this embodiment, in addition to the arms 2212 being foldable, the foldable rotors 220 themselves are also foldable. Specifically, each foldable rotor 220 in this embodiment includes at least two blades 2222 and a hub 2223. The two blades 2222 are connected to opposite sides of the hub 2223 and can move toward each other to assume a folded state. Moreover, the two blades 2222 in the folded state are arranged in the length direction of the corresponding arm 2212. In other words, the blades 2222 are stacked on the corresponding arm 2212, so as to reduce the outer contour of the aircraft 200. To simplify the structure of the foldable rotors 220, the foldable rotors 220 in the present embodiment are single-shaft single-blade rotors and are fixed-pitch rotors. In other words, when the foldable rotors 220 are in a rotating state, the blades 2222 do not deflect or move relative to the hubs 2223.

Referring again to Fig. 10, for ease of illustration and distinction of the foldable rotors 220, the six foldable rotors 220 in this embodiment are respectively defined as a first rotor 2230, a second rotor 2240, a third rotor 2250, a fourth rotor 2260, a fifth rotor 2270, and a sixth rotor 2280. The six foldable rotors 220 are arranged circumferentially, and are arranged in ascending order in the counterclockwise direction of the circumferential arrangement. That is, in the counterclockwise direction, the first rotor 2230, the second rotor 2240, the third rotor 2250, the fourth rotor 2260, the fifth rotor 2270 and the sixth rotor 2280 are sequentially arranged at intervals. When the aircraft 200 is projected onto a horizontal plane in a flight state, with the forward direction of the aircraft 200 as a reference direction, the second rotor 2240, the third rotor 2250 and the fourth rotor 2260 are located on the left side of the aircraft body 210, and the first rotor 2230, the sixth rotor 2280, and the fifth rotor 2270 are located on the right side of the aircraft body 210. Specifically, the third rotor 2250 is located on the left side of the aircraft body 210, the second rotor 2240 is located on the left front side of the aircraft body 210, and the fourth rotor 2260 is located on the left rear side of the aircraft body 210. The sixth rotor 2280 is located on the right side of the aircraft body 210, the first rotor 2230 is located on the right front side of the aircraft body 210, and the fifth rotor 2270 is located on the right rear side of the aircraft body 210.

Referring to Fig. 10, it can be derived from the foregoing description that the first rotor 2230 and the second rotor 2240 correspond to the third body portion 2190, the third rotor 2250 and the sixth rotor 2280 correspond to the second body portion 2180 of the aircraft body 210, and the fourth rotor 2260 and the fifth rotor 2270 correspond to the first body portion 2170. Moreover, the first rotor 2230 and the fourth rotor 2260 are located on the same diagonal of the polygon 2225 and form a pair; the second rotor 2240 and the fifth rotor 2270 are located on the same diagonal and form a pair; and the third rotor 2250 and the sixth rotor 2280 are located on the same diagonal and form a pair. Assuming that the first rotor 2230, the third rotor 2250 and the fifth rotor 2270 are configured to rotate in a first direction (e.g., clockwise direction), and the second rotor 2240, the fourth rotor 2260 and the sixth rotor 2280 are configured to rotate in a second direction (e.g., counterclockwise direction), the second direction is opposite to the first direction.

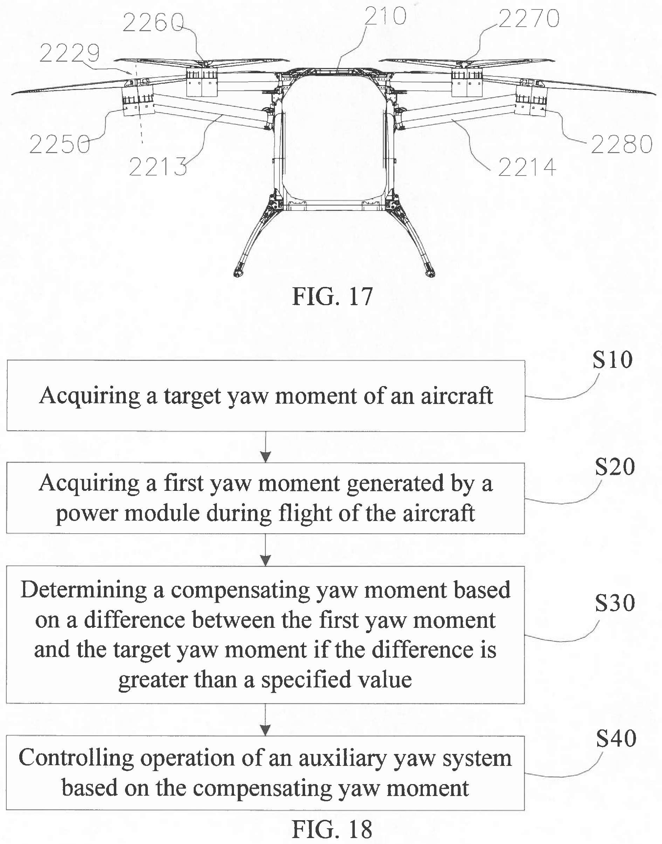

Referring to Fig. 17, as mentioned above, when the aircraft 200 is in a level flight state, where the aircraft 200 is projected onto a horizontal plane, the projections of the rotor revolution planes 2224 of at least two adjacent foldable rotors 220 partially overlap with each other, so as to limit the degree of divergence of the foldable rotors 220. However, in an actual spatial structure, it is required to prevent the rotor revolution planes 2224 of two adjacent foldable rotors 220 from overlapping. The rotor revolution planes 2224 of the foldable rotors 220 are located on at least two planes, so as to avoid structural collision between two adjacent foldable rotors 220 and ensure safety and reliability of the foldable rotors. In this embodiment, the rotor revolution planes 2224 of at least two of the foldable rotors 220 are non-coplanar. Specifically, in this embodiment, the two foldable rotors 220 corresponding to the first body portion 2170 and the two foldable rotors 220 corresponding to the third body portion 2190 are arranged on the same horizontal plane, which is defined as a first horizontal plane. The two foldable rotors 220 corresponding to the second body portion 2180 are arranged on another horizontal plane, which is defined as a second horizontal plane. The first horizontal plane is higher than the second horizontal plane. That is, the third rotor 2250 and the sixth rotor 2280 are located on a side of the first rotor 2230, the second rotor 2240, the fourth rotor 2260, and the fifth rotor 2270 facing the ground. The heights of the third rotor 2250 and the sixth rotor 2280 are lower than those of the first rotor 2230, the second rotor 2240, the fourth rotor 2260 and the fifth rotor 2270, so as to avoid collision between the third rotor 2250 and the second rotor 2240 as well as the fourth rotor 2260, and collision between the sixth rotor 2280 and the first rotor 2230 as well as the fifth rotor 2270. To avoid collision between the first rotor 2230 and the second rotor 2240 which are located on the same plane, and collision between the fourth rotor 2260 and the fifth rotor 2270 which are located on the same plane, reasonable avoidance can be achieved based on the length of the arms 2212 and the length of the blades 2222, which will not be elaborated herein. In other embodiments, the foldable rotors 220 may be arranged on different planes, which will not be specifically limited in this embodiment.

In this embodiment, the first rotor 2230, the second rotor 2240, the fourth rotor 2260 and the fifth rotor 2270 are arranged at intervals at four corners of the aircraft body 210 in the forward direction of the aircraft 200. The structures of the first rotor 2230, the second rotor 2240, the fourth rotor 2260 and the fifth rotor 2270 and airflows generated thereby do not interfere with each other. Therefore, in this embodiment, the rotation axes of the first rotor 2230, the second rotor 2240, the fourth rotor 2260 and the fifth rotor 2270 are arranged in a vertical direction. That is, the blades 2222 of the first rotor 2230, the second rotor 2240, the fourth rotor 2260 and the fifth rotor 2270 are arranged substantially horizontally, forming substantially horizontal rotor revolution planes 2224, so as to provide driving force in a vertical direction to the aircraft body 210.

Referring to Fig. 11, when the aircraft 200 is projected onto a horizontal plane, there is a projection overlap between the third rotor 2250 and the second rotor 2240 as well as the fourth rotor 2260. To avoid excessive overlap of the airflow generated by the third rotor 2250 with the airflows generated by the second rotor 2240 and the fourth rotor 2260 in an actual spatial structure, rotor blades of the third rotor 2250 is arranged obliquely (as shown in Fig. 17) in this embodiment, such that both the rotation axis and the rotor revolution plane 2224 of the third rotor 2250 are arranged obliquely. Arranging the rotor revolution plane 2224 of the third rotor 2250 obliquely can reduce the mutual airflow interference between the third rotor 2250 and the second rotor 2240 as well as the fourth rotor 2260, thereby improving the aerodynamic efficiency of the foldable rotors 220.

Specifically, with reference to FIG. 17, the two blades 2222 of the third rotor 2250 are substantially collinear in a deployed state. When the two blades 2222 rotate to the same vertical plane, the blade 2222 close to the aircraft body 210 is higher than the blade 2222 away from the aircraft body 210, such that the rotor top end 2229 of the third rotor 2250 facing the sky is inclined outward relative to the aircraft body 210, and the rotor revolution plane 2224 of the third rotor 2250 is also inclined outward relative to the aircraft body 210. Such outward inclination allows the radial direction of the third rotor 2250 to be offset relative to the flight cabin 2110, and the radial direction of the third rotor 2250 does not perpendicularly face the flight cabin 2110, thereby reducing damage to the flight cabin 2110 and people therein in the event of accidental burst.

To further protect the structure of each foldable rotor 220, in this embodiment, the rotor revolution plane 2224 of the third rotor 2250 is lower than the rotor revolution planes 2224 of the second rotor 2240 and the fourth rotor 2260. In this embodiment, an included angle between the rotation axis of the third rotor 2250 and a vertical direction is not less than 5°. In combination with the foregoing description, it can be determined that the included angle between the rotation axis of the third rotor 2250 and the vertical direction ranges from 5° to 10°. In other embodiments, the included angle between the rotation axis of the third rotor 2250 and the vertical direction may be adaptively adjusted according to actual conditions.

Referring to FIG. 17, the positional relationship among the sixth rotor 2280, the first rotor 2230 and the fifth rotor 2270 in this embodiment may be set with reference to the positional relationship among the third rotor 2250, the second rotor 2240 and the fourth rotor 2260 described above. The sixth rotor 2280, the first rotor 2230 and the fifth rotor 2270 are substantially mirror-symmetric to the third rotor 2250, the second rotor 2240 and the fourth rotor 2260 about the central axial plane of the aircraft body 210 in this embodiment.

When the aircraft 200 is projected onto a horizontal plane, there is a projection overlap between the sixth rotor 2280 and the first rotor 2230 as well as the fifth rotor 2270. To avoid excessive overlap of the airflow generated by the sixth rotor 2280 with the airflows generated by the first rotor 2230 and the fifth rotor 2270 in an actual spatial structure, the sixth rotor 2280 is arranged obliquely (as shown in FIG. 17) in this embodiment, such that both the rotation axis and the rotor revolution plane of the sixth rotor 2280 are arranged obliquely. Arranging the rotor revolution plane 2224 of the sixth rotor 2280 obliquely can reduce the mutual airflow interference between the sixth rotor 2280 and the first rotor 2230 as well as the fifth rotor 2270, thereby improving the aerodynamic efficiency of the foldable rotors 220.

Specifically, the two blades 2222 of the sixth rotor 2280 are substantially collinear in a deployed state. When the two blades 2222 rotate to the same vertical plane, the blade 2222 close to the aircraft body 210 is higher than the blade 2222 away from the aircraft body 210, such that the rotor top end of the sixth rotor 2280 facing the sky is inclined outward relative to the aircraft body 210, and the rotor revolution plane 2224 of the sixth rotor 2280 is also inclined outward relative to the aircraft body 210. Such outward inclination allows the radial direction of a motor of the sixth rotor 2280 to be offset relative to the flight cabin 2110, and the radial direction of the motor of the sixth rotor 2280 does not perpendicularly face the flight cabin 2110, thereby reducing damage to the flight cabin 2110 and people therein in the event of accidental burst of the motor.

To further protect the structure of each foldable rotor 220, in this embodiment, the rotor revolution plane 2224 of the sixth rotor 2280 is lower than the rotor revolution planes 2224 of the first rotor 2230 and the fifth rotor 2270. In this embodiment, an included angle between the rotation axis of the sixth rotor 2280 and the vertical direction is not less than 5°. In combination with the foregoing description, it can be determined that the included angle between the rotation axis of the sixth rotor 2280 and the vertical direction ranges from 5° to 10°. In other embodiments, the included angle between the rotation axis of the sixth rotor 2280 and the vertical direction may be adaptively adjusted according to actual conditions.

In this embodiment, four of the six arms 2212 are arranged in one-to-one correspondence with the first rotor 2230, the second rotor 2240, the fourth rotor 2260 and the fifth rotor 2270, and the remaining two arms 2212 are arranged in one-to-one correspondence with the third rotor 2250 and the sixth rotor 2280. For ease of distinction, the arm 2212 corresponding to the third rotor 2250 is defined as a first arm 2213, and the arm 2212 corresponding to the sixth rotor 2280 is defined as a second arm 2214. The first arm 2213 and the second arm 2214 are respectively arranged on two sides of the aircraft body 210 in the forward direction of the aircraft 200.

Referring to FIG. 6, to realize the staggered arrangement of the six foldable rotors 220 at different heights, when the six arms 2212 in the present embodiment are all in a folded state, the four arms 2212 other than the first arm 2213 and the second arm 2214 are stacked side by side on the same plane which is substantially a horizontal plane. The first arm 2213 and the second arm 2214 are stacked on a side of the four arms 2212 facing the ground, so as to satisfy the positional state of the third rotor 2250 and the sixth rotor 2280 relative to the first rotor 2230, the second rotor 2240, the fourth rotor 2260 and the fifth rotor 2270, and improve the space utilization rate of the six arms 2212 and the six foldable rotors 220.

Referring to FIG. 4, an auxiliary yaw system of the aircraft 200 in this embodiment includes two ducted fans 230. The two ducted fans 230 are arranged on the aircraft body 210, and the ducted fans 230 can provide an auxiliary yaw moment to compensate for a yaw moment deviation caused by a failed foldable rotor 220 when the yaw moment generated by the six foldable rotors 220 is insufficient or one of the six foldable rotors 220 fails. In this embodiment, the ducted fans 230 maintain a stable state relative to the structure of the aircraft body 210, thereby simplifying the mounting structure of the ducted fans 230. The fixed positions of the ducted fans 230 are specifically embodied as follows: each ducted fan 230 has a rotation axis, and the positions of the rotation axes of the ducted fans 230 relative to the aircraft body 210 are always fixed in a flight state. In other embodiments, the ducted fans 230 may be movably arranged on the aircraft body 210 to increase the flexibility of the ducted fans 230 and improve the performance of the auxiliary yaw system. In this embodiment, the ducted fans 230, which serve as the auxiliary yaw system, can generate a relatively large yaw moment, and when the aircraft 200 is in a flight state, the ducted fans 230 experience low resistance, resulting in high overall operating efficiency.

In addition, when the aircraft 200 is in level flight, the included angle between the rotation axis of each ducted fan 230 and the horizontal plane is' substantially less than or equal to 5° in this embodiment. In other embodiments, the included angle between the rotation axis of the ducted fan 230 and the horizontal plane may be adaptively adjusted according to actual conditions.

Referring to FIG. 4, for ease of illustration of the specific positions of the ducted fans 230 on the aircraft body 210 and their relative positional relationships with other structures, the two ducted fans 230 in this embodiment are defined as a first ducted fan 2311 and a second ducted fan 2312. Specifically, the first ducted fan 2311 is arranged corresponding to the third rotor 2250, and the first ducted fan 2311 is arranged on the first arm 2213. The second ducted fan 2312 is arranged corresponding to the sixth rotor 2280, and the second ducted fan 2312 is arranged on the second arm 2214. The first arm 2213 and the second arm 2214 are respectively located on the left and right sides of the aircraft body 210 in the forward direction of the aircraft 200. When the aircraft body 210 yaws, the first ducted fan 2311 and the second ducted fan 2312 arranged on the first arm 2213 and the second arm 2214 can produce a relatively large yaw moment. Under the condition that the rated power of the first ducted fan 2311 and the second ducted fan 2312 remains unchanged, the compensation adjustment range formed by arranging the first ducted fan 2311 and the second ducted fan 2312 on the first arm 2213 and the second arm 2214 is larger than that formed by arranging same on the four arms 2212 other than the first arm 2213 and the second arm 2214.

In this embodiment, both the first ducted fan 2311 and the third rotor 2250 are arranged on the first arm 2213. The first ducted fan 2311 and the third rotor 2250 may be located at a distal end of the first arm 2213 away from the aircraft body 210, and since the distance from this position to the center of gravity of the aircraft body 210 is relatively long, the lateral moment arm is long, and a relatively large yaw moment can be generated, thereby improving the power efficiency of the first ducted fan 2311.

Specifically, the first arm 2213 has a top side and a bottom side, which face away from each other. The top side of the first arm 2213 faces the sky, and the bottom side thereof faces the ground. The third rotor 2250 is arranged on the top side of the first arm 2213, and the first ducted fan 2311 is arranged on the bottom side of the first arm 2213, such that the third rotor 2250 and the first ducted fan 2311 are spaced apart from each other to avoid structural collision. Further, in order to reduce the influence of airflow from the tips of the blades 2222 of the third rotor 2250 on the first ducted fan 2311, the first ducted fan 2311 is arranged to avoid the blades 2222 of the third rotor 2250 in this embodiment. Specifically, the first ducted fan 2311 has a rotation center (i.e., a rotation axis) in this embodiment. The hub 2223 of the third rotor 2250 forms a first maximum rotation plane during rotation. When the aircraft 200 is projected onto a horizontal plane, the projection of the first maximum rotation plane covers the rotation center of the first ducted fan 2311, such that the rotation center of the first ducted fan 2311 and structures in the vicinity thereof are arranged corresponding to the hub 2223 of the third rotor 2250. From a macroscopic structural perspective, the rotation center (i.e., rotation axis) of the first ducted fan 2311 is located directly below the hub 2223 of the third rotor 2250. Therefore, the airflow at the hub 2223 of the third rotor 2250 is small and weak, and has little influence on the first ducted fan 2311.

Similarly, the second ducted fan 2312 has a rotation center (i.e., a rotation axis) in this embodiment. The hub 2223 of the sixth rotor 2280 forms a second maximum rotation plane during rotation. When the aircraft 200 is projected onto a horizontal plane, the projection of the second maximum rotation plane covers the rotation center of the second ducted fan 2312, such that the rotation center of the second ducted fan 2312 and structures in the vicinity thereof are arranged corresponding to the hub 2223 of the sixth rotor 2280. From a macroscopic structural perspective, the rotation center (i.e., rotation axis) of the second ducted fan 2312 is located directly below the hub 2223 of the sixth rotor 2280. Therefore, the airflow below the hub 2223 of the sixth rotor 2280 is small and weak, and has little influence on the second ducted fan 2312.

In order to monitor the operating state of each foldable rotor 220 and control the operating timing of the ducted fans 230 based on the operating state of each foldable rotor 220, the aircraft 200 in this embodiment further includes a yaw control system (not shown). The yaw control system is electrically connected to the foldable rotors 220 and the ducted fans 230 respectively, so as to enable information interaction and instruction execution. The control mechanism of the yaw control system in response to failure of one foldable rotor 220 is as follows: when any one of the foldable rotors 220 fails, the yaw control system controls the two ducted fans 230 to operate so as to provide the aircraft 200 with a compensating yaw moment which is substantially equal to the difference between an actual yaw moment jointly formed by the remaining five foldable rotors 220 and a target yaw moment. With the yaw control system, the aircraft 200 can cope with the failure of a foldable rotor 220, ensuring the safety of the operator and the aircraft 200.

In addition, the control mechanism of the yaw control system in response to insufficient yaw moment when the six foldable rotors 220 operate normally is as follows: the yaw control system controls the two ducted fans 230 to operate so as to provide the aircraft 200 with a compensating yaw moment which is substantially equal to the difference between an actual yaw moment jointly formed by the six foldable rotors 220 and a target yaw moment.

As can be seen from the foregoing, the first rotor 2230 and the fourth rotor 2260 form a pair, the second rotor 2240 and the fifth rotor 2270 form a pair, and the third rotor 2250 and the sixth rotor 2280 form a pair. The foldable rotors 220 in each pair can maintain the balance of the aircraft body 210 on the corresponding diagonal line. To simplify the control over the six foldable rotors 220 by the yaw control system, the yaw control system in this embodiment is further configured to: when any one foldable rotor 220 fails, control the foldable rotor 220 corresponding to the failed foldable rotor 220 to stop operating, and control the two ducted fans 230 to operate so as to provide a compensating yaw moment to the aircraft body 210. The advantage of such arrangement is as follows: Assuming the first rotor 2230 fails, the yaw control system controls the fourth rotor 2260 to stop operating, and controls the two ducted fans 230 to operate so as to compensate for the yaw moment deviation caused by the failure of the first rotor 2230 and the fourth rotor 2260. In this process, the yaw control system only needs to control the two ducted fans 230 to provide the yaw moment required for yawing of the aircraft body 210. This design can omit or reduce the considerations of the fourth rotor 2260, such as differences between the fourth rotor 2260 and the two ducted fans 230 in position, output power, resistance experienced, and other aspects. This can simplify the calculation steps of the yaw control system, improve the working efficiency, and restore normal operation in a short time during the flight of the aircraft 200.

Further, assuming the first rotor 2230 fails, the yaw control system controls the fourth rotor 2260 to stop operating, while the second rotor 2240 and the fifth rotor 2270, as well as the third rotor 2250 and the sixth rotor 2280, can still maintain the balance of the aircraft body 210. The yaw control system only needs to control the four normally operating foldable rotors 220 to increase the output power so as to compensate for the traction force in the vertical direction to reach the target traction force, without comprehensively considering the balance adjustment among the second rotor 2240, the third rotor 2250, the fourth rotor 2260, the fifth rotor 2270 and the sixth rotor 2280.

In summary, the flying vehicle 1000 provided by the embodiments of the present application includes an automobile 100 and an aircraft 200, which are detachably coupled. The automobile 100 is configured to travel on the ground so that the flying vehicle 1000 has a function of traveling on the ground. The automobile 100 includes an automobile body 110, a plurality of wheel assemblies 120, and a separation and connection device 130. The automobile body 110 is the main structure of the automobile 100 and carries the load of the automobile 100 and other functional devices. The automobile body 110 includes a land cabin 1110 and a bearing platform 1130 which are connected. The land cabin 1110 is provided with seats for people, and the bearing platform 1130 is configured to park the aircraft 200. The plurality of wheel assemblies 120 are arranged on an automobile chassis of the automobile body 110, so that the automobile body 110 can travel on land. The separation and connection device 130 is arranged on the bearing platform 1130 of the automobile body 110, and is configured to subsequently dock with and tow the aircraft 200. The aircraft 200 is configured to fly in the air so that the flying vehicle 1000 has an air flight function. The aircraft 200 and the automobile 100 jointly constitute the flying vehicle 1000 having both land travel and flight functions. The aircraft 200 includes an aircraft body 210 and a plurality of foldable rotors 220 arranged on the aircraft body 210. The aircraft body 210 is a main structure of the aircraft 200, and a flight cabin 2110 is arranged on the aircraft body 210 for people to ride. The plurality of foldable rotors 220 are arranged on the aircraft body 210 and configured to provide power for the aircraft 200 to travel in the air. Driven by the plurality of foldable rotors 220, the aircraft 200 can ascend into the air and travel. The aircraft 200 may further include two ducted fans 230 connected to the aircraft body 210. The two ducted fans 230 are configured to provide the aircraft body 210 with a compensating yaw moment when a yaw moment formed by the plurality of foldable rotors 220 is in an unbalanced state. In the embodiments of the present application, after finishing flying, the aircraft 200 may be coupled to the bearing platform 1130 of the automobile 100. Specifically, the aircraft 200 switches from a flight state to a state of being parked on the ground. Then, the automobile 100 travels to the vicinity of the aircraft 200 and controls the automobile 100 to align with the aircraft 200 in position, so as to drive the separation and connection device 130 to automatically connect to the aircraft body 210, and drive the aircraft body 210 to move toward the automobile body 110 until the aircraft body 210 is detachably coupled to the bearing platform 1130. In this embodiment, the aircraft 200 and the automobile 100 are two independent transportation devices which are detachably coupled. The aircraft 200 can be decoupled from the automobile 100 before takeoff. After decoupling, the aircraft 200 is first parked on the ground, then the aircraft 200 takes off from the ground and ascends into the air, while the automobile 100 stays on land. In the embodiments of the present application, the aircraft 200 does not require precise positioning with the bearing platform 1130. The aircraft 200 only needs to land on the ground first, and then the automobile 100 moves to a position near the aircraft 200 and aligns with the aircraft 200, so that the separation and connection device 130 docks with the aircraft 200 and tows the aircraft 200 onto the bearing platform 1130. The control difficulty in coupling the aircraft body 210 with the automobile 100 is relatively low, which improves the efficiency of coupling the aircraft body 210 with the bearing platform 1130. The relative position between the aircraft 200 and the automobile 100 is also adjustable during towing. During the process of coupling the aircraft 200 to the bearing platform 1130 and the process of decoupling, the foldable rotors 220 are in a folded and received state, thereby improving the safety of the flying vehicle 1000 during use.

Referring to FIG. 18, based on the aircraft described above and the yaw control system thereof, an embodiment of the present application further provides a flight control method for an aircraft. The flight control method includes the following steps:
S10: acquiring a target yaw moment of an aircraft.

The target yaw moment refers to the yaw moment required for the aircraft body to yaw by a certain angle (e.g., a target yaw angle, which can be set according to actual needs). The yaw control system obtains the target yaw moment required for yawing of the aircraft on the basis of the target yaw moment and parameters of the aircraft. Specifically, the parameters of the aircraft include the weight of the aircraft, the resistance experienced by the aircraft, the air pressure of an air layer where the aircraft is located, and the air flow velocity.

In some embodiments, the step "S10: acquiring a target yaw moment of an aircraft" includes: acquiring a current yaw angle and a target yaw angle of the aircraft; and determining the target yaw moment of the aircraft based on the current yaw angle and the target yaw angle.

S20: acquiring a first yaw moment generated by the foldable rotors during flight of the aircraft.

The yaw control system acquires actual output powers of the plurality of foldable rotors, calculates a first yaw moment generated by the foldable rotors according to the actual output power thereof, and compares the first yaw moment with the target yaw moment to determine whether the first yaw moment can satisfy yawing of the aircraft to the target yaw angle.

S30: determining a compensating yaw moment based on a difference between the first yaw moment and the target yaw moment if the difference is greater than a specified value.

When the yaw control system determines that the difference between the first yaw moment and the target yaw moment is greater than the specified value, it indicates that the aircraft body cannot smoothly yaw to the target yaw angle under the first yaw moment. The specified value in this embodiment refers to the difference between upper and lower limits of a yaw moment range within which the aircraft body can achieve the target yaw angle, and the target yaw moment falls within the range. In some embodiments, the specified value refers to the difference between the minimum yaw moment allowing the aircraft body to achieve the target yaw angle and the target yaw moment. In other embodiments, the specified value may also be a numerical range. The minimum value in the numerical range indicates that the first yaw moment can sufficiently support the aircraft to yaw to the target yaw angle when the difference between the target yaw moment and the first yaw moment equals the minimum value. The maximum value in the numerical range indicates that the first yaw moment can substantially support the aircraft to yaw to the target yaw angle when the difference between the target yaw moment and the first yaw moment equals the maximum value.

Then, the yaw control system calculates the compensating yaw moment to be provided by the auxiliary yaw system, based on the first yaw moment, the target yaw moment and the specified value.

S40: controlling operation of the auxiliary yaw system based on the compensating yaw moment. The difference between the target yaw moment and the sum of a second yaw moment generated by operation of the auxiliary yaw system and the first yaw moment is less than or equal to the specified value.

The yaw control system controls the auxiliary yaw system to operate, and the ducted fans in the auxiliary yaw system operate to generate the second yaw moment. The difference between the target yaw moment and the sum of the second yaw moment and the first yaw moment shall be less than or equal to the specified value, so that the aircraft can yaw to the target yaw angle under the combined driving of the foldable rotors and the auxiliary yaw system.

In some embodiments, the controlling operation of the auxiliary yaw system based on the compensating yaw moment includes: determining a target power of the ducted fans based on the compensating yaw moment; determining a target rotational speed of the ducted fans based on the target power as well as the dimensions and aerodynamic efficiency of the ducted fans; and controlling the operation of the ducted fans based on the target rotational speed, so that the ducted fans generate the second yaw moment.

Therefore, in this embodiment, by introducing the auxiliary yaw system which is operable to provide a compensating yaw moment to the aircraft body when the yaw moment formed by the foldable rotors is in an unbalanced state, the aircraft body can overcome the problem of failure in yawing due to yaw moment imbalance. Specifically, the power of the auxiliary yaw system varies in real time based on the flight posture and flight power parameters. After detecting a failure of a foldable rotor, the auxiliary yaw system starts to operate. When active or passive yaw deviation of the entire aircraft occurs, the overall controller or flight control system can control the yaw of the entire aircraft in accordance with a predetermined control principle (such as heading hold or main nose direction adjustment). If the overall controller or flight control system finds insufficient control capability, the auxiliary yaw system operates for supplementary control to meet the yaw control requirements of the entire aircraft.

In some embodiments, the step "S20: acquiring a first yaw moment generated by the foldable rotors during flight of the aircraft" includes the following steps S21 to S22.

S21: acquiring operating parameters of each foldable rotor and fault indicator parameters of the foldable rotors during flight of the aircraft, wherein the fault indicator parameters are monitored and obtained by a fault self-check system of the aircraft, and the fault indicator parameters characterize the degree of fault of the foldable rotors.

Specifically, the overall controller or the yaw control system can acquire the operating parameters of each foldable rotor. The operating parameters of the foldable rotors may include output powers of the foldable rotors and resistance on the foldable rotors. The aircraft further includes a fault self-check system electrically connected to the yaw control system. The fault self-check system is configured to detect the degree of fault of the foldable rotors (such as the damage degree or severity of the fault), record the degree of fault of the foldable rotors as fault indicator parameters, and transmit the fault indicator parameters of the foldable rotors to the yaw control system. Taking a rotor assembly as an example of the foldable rotor, the fault detection system may include a fault detection circuit connected to a motor drive circuit and configured to determine whether the rotor motor operates normally based on an electrical signal condition of the motor drive circuit (such as at least one of output power, current, and voltage), so as to obtain the fault degree of the rotor motor. In another example, the fault detection system may further include a rotational speed sensor which may be connected to a rotor shaft and configured to detect a rotational state of the rotor (such as at least one of rotational direction, rotational speed, and rotational acceleration), and determine whether the rotor operates normally based on the rotational state, so as to obtain the fault degree of the rotor.

In some examples, the information carried in the fault indicator parameters may include a specific faulty component and a specific fault damage degree. For example, the fault indicator parameters may be represented by a code such as fault code EA2, where one part of the code (e.g., EA) represents a specific fault location (such as a motor or a rotor), and the other part represents the severity of the fault (such as a level-1 fault or a level-2 fault). Therefore, the overall controller can determine the specific fault location and fault severity by reading the fault indicator parameters.

S22: acquiring a first yaw moment generated by the foldable rotors, when it is determined that at least one of the plurality of foldable rotors fails based on the operating parameters and the fault indicator parameters.

Specifically, since the fault indicator parameters carry information including a specific faulty component and a specific fault damage degree, the overall controller or the yaw control system can determine the number of faulty foldable rotors among the plurality of foldable rotors based on the fault indicator parameters. When at least one of the plurality of foldable rotors fails, the overall controller or the yaw control system can acquire, based on the operating parameters of the foldable rotors, the first yaw moment generated by the foldable rotors. In practice, in some embodiments, when no foldable rotor fails, it is not necessary to specially acquire the first yaw moment generated by the foldable rotors. Instead, when it is determined based on the fault indicator parameters that a foldable rotor is fails, it indicates that the yaw moment generated thereby may deviate from the target yaw moment, and thus it is required to acquire the first yaw moment generated by the foldable rotors. Therefore, in this embodiment, less system resources are consumed for control and calculation, which facilitates smooth operation of the overall controller.

In some embodiments, when one of the plurality of foldable rotors fails, the step "S22: acquiring a first yaw moment generated by the foldable rotors, when it is determined that at least one of the plurality of foldable rotors fails based on the operating parameters and the fault indicator parameters" includes the following steps S221 to S222.

S221:when it is determined that one of the plurality of foldable rotors fails based on the operating parameters and the fault indicator parameters, controlling the foldable rotor corresponding to the faulty foldable rotor to stop operating.

Combined with the distribution of the power system described above, when one of the plurality of foldable rotors fails, the yaw control system controls the foldable rotor corresponding to the faulty foldable rotor to stop operating, so as to maintain the balance of the aircraft body in the horizontal direction. In this embodiment, the plurality of foldable rotors are arranged axisymmetrically and pairwise. In this case, once one of the plurality of foldable rotors fails, the control process of stopping the operation of the corresponding foldable rotor can keep the lift and thrust provided by the remaining foldable rotors substantially balanced, the operating parameters are easy to control, and the calculation burden of the overall control system is relatively small.

S222: acquiring the first yaw moment jointly generated by the foldable rotors other than the faulty foldable rotor and a corresponding foldable rotor thereof.

Taking six foldable rotors as an example, when two of the plurality of foldable rotors stop operating, the yaw control system recalculates the first yaw moment generated by the remaining four foldable rotors, and controls the auxiliary yaw system to operate so as to provide a compensating yaw moment.

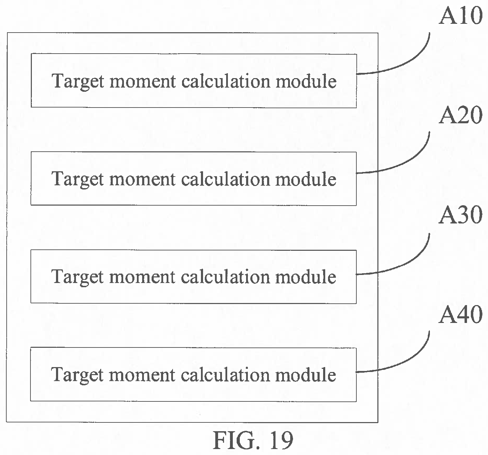

Referring to FIG. 19, FIG. 19 is a schematic functional framework diagram of a flight control device disclosed in an embodiment of the present application. Based on the above-described aircraft and flight control method thereof, an embodiment of the present application further provides a flight control device. The flight control device may include a target moment calculation module A10, an actual moment calculation module A20, a compensating moment calculation module A30 and a compensation yaw module A40.

The target moment calculation module A10 is configured to acquire a target yaw moment of an aircraft, and the actual moment calculation module A20 is configured to acquire a first yaw moment generated by foldable rotors during flight of the aircraft. The compensating moment calculation module A30 is configured to determine a compensating yaw moment based on a difference between the first yaw moment and the target yaw moment if the difference is greater than a specified value. The compensation yaw module A40 is configured to control operation of the auxiliary yaw system based on the compensating yaw moment. The difference between the target yaw moment and the sum of a second yaw moment generated by operation of the auxiliary yaw system and the first yaw moment is less than or equal to the specified value. For specific working processes of the above functional units/modules, reference may be made to corresponding processes in the foregoing method embodiments, and details are not described herein again.

In the embodiments provided in the present application, the coupling between the units/modules may be electrical, mechanical, or in other forms. In addition, the functional units/modules in various embodiments of the present application may be integrated into one processing unit, may exist physically separately; or, two or more of the units may be integrated into one unit. The integrated unit may be implemented in the form of hardware or in the form of a software functional unit.

Based on the above-described flying vehicle and flight control method, an embodiment of the present application may further provide an aircraft, which may include a processor and a memory. The memory may store one or more computer programs. The one or more computer programs are configured to execute the method described in the foregoing method embodiments. The memory may exist separately or be integrated with the processor.

The processor may include one or more processing cores. The processor may connect various parts within the entire land automobile by using various interfaces and lines, and may perform various functions of the land automobile and process data by running or executing instructions, programs, code sets, or instruction sets stored in the memory and invoking data stored in the memory. In an embodiment, the processor may be implemented in at least one hardware form of a digital signal processor (DSP), a field programmable gate array (FPGA), or a programmable logic array (PLA). The processor may integrate one or more of a central processing unit (CPU), a graphics processing unit (GPU), a modem, and the like. The CPU mainly handles the operating system, user interfaces, application programs and the like; the GPU is responsible for rendering and drawing display content; and the modem is configured to process wireless communications. It should be understood that the modem described above may also be implemented separately by means of a communication chip, instead of being integrated into the processor.

The memory may include a random access memory (RAM) and a read-only memory (ROM). The memory may be configured to store instructions, programs, codes, code sets, or instruction sets. The memory may include a program storage area and a data storage area. The program storage area may store instructions for implementing an operating system, instructions for implementing at least one function (such as a touch function, an audio playback function, and an image playback function), instructions for implementing the foregoing method embodiments, and the like. The data storage area may also store data (such as a phone book, audio and video data, and chat log data) created during the use of the land automobile.

When the computer program instructions stored in the memory are executed, the processor may be configured to perform various operations executed by the land automobile in the foregoing method embodiments. For specific implementations of these operations, reference may be made to the foregoing embodiments, and details are not described herein again.

Embodiments of the present application further provide a computer-readable storage medium. Computer program codes are stored in the computer-readable medium, and may be invoked by a processor to perform various operations in the foregoing method embodiments. For specific implementations of the foregoing operations, reference may be made to the foregoing embodiments, and details are not described herein again.

The computer-readable storage medium may be an electronic memory such as a flash memory, an electrically erasable programmable read-only memory (EEPROM), an erasable programmable read-only memory (EPROM), a hard disk, or a ROM. In an embodiment, the computer-readable storage medium may include a non-transitory computer-readable storage medium. The computer-readable storage medium has storage space for program codes for performing any of the method steps in the above method. Such computer program codes may be read from or written to one or more computer program products. The computer program codes may be compressed in an appropriate form, for example.

In the specification of the present application, some terms are used in the specification and claims to refer to specific components. It should be understood by those skilled in the art that hardware manufacturers may refer to the same component by different designations. The specification and claims do not distinguish components by differences in their designations, but by differences in their functions. For example, the term "comprising/including" as used throughout the specification and claims is an open-ended term and thus should be interpreted as "including but not limited to". The term "substantially" means that those skilled in the art can solve the technical problem within a range of error and substantially achieve the technical effect.

In the description of the present application, it should be understood that the orientation or positional relationships indicated by the terms "upper", "lower", "front", "rear", "left", "right", "inner" and the like are based on the orientation or positional relationships shown in the accompanying drawings. These terms are merely for the convenience of describing the present application and simplifying the description, rather than indicating or implying that the device or element referred to must have a specific orientation, be constructed and operated in a specific orientation. Therefore, they shall not be construed as a limitation on the present application.

As used herein, the terms "mounted", "connected", "connect", "fixed" and the like shall be understood in a broad sense unless otherwise clearly specified or limited. For example, the connection may be a fixed connection, a detachable connection, or an integral connection; it may be a mechanical connection or an electrical connection; it may be a direct connection, an indirect connection by means of an intermediate medium, an internal communication between two elements, or merely a surface contact. For those of ordinary skill in the art, the specific meanings of the above terms in the present disclosure can be understood according to specific circumstances.

In the description of the present specification, references to terms such as "an embodiment," "some embodiments," "an example," "a specific example," or "some examples" mean that the specific features, structures, materials, or characteristics described in conjunction with such embodiment or example are included in at least one embodiment or example of the present application. As used herein, the schematic representations of the above terms do not necessarily refer to the same embodiment or example. Moreover, the specific features, structures, materials or characteristics described may be combined in any one or more embodiments or examples in a suitable manner. In addition, those skilled in the art may combine and integrate the different embodiments or examples described herein and the features of the different embodiments or examples, provided that such combinations do not conflict with each other.

In addition, the terms "first" and "second" are used for descriptive purposes only rather than being understood as indicating or implying relative importance or as implicitly indicating the quantity of technical features indicated. Therefore, the features defined as "first" and "second" may explicitly or implicitly include at least one of the features. In the description of the present application, the term "a plurality of" means at least two, such as two and three, unless otherwise clearly and specifically defined.

Finally, it should be noted that the above embodiments are only used for illustrating the technical solutions of the present application, but not to limit them. Although the present application has been described in detail with reference to the foregoing embodiments, those of ordinary skill in the art should understand that they may still modify the technical solutions described in the foregoing embodiments, or make equivalent substitutions to some of the technical features thereof. Such modifications or substitutions do not cause the essence of the corresponding technical solutions to depart from the spirit and scope of the technical solutions of the embodiments of the present application.

## Claims

1. A flying vehicle, comprising an automobile and an aircraft detachably coupled to the automobile, wherein
the automobile comprises:
an automobile body, a land cabin being fixedly arranged on the automobile body; and
a separation and connection device arranged on the automobile body;
the aircraft comprises:
an aircraft body, a flight cabin being fixedly arranged on the aircraft body; and
a plurality of foldable rotors arranged on the aircraft body;
wherein the aircraft is capable of vertically taking off from and landing on a ground after being separated from the automobile, and when the aircraft is parked on the ground, the separation and connection device is configured to connect to the aircraft and to drive the aircraft to move onto the automobile body so that the aircraft is detachably coupled with the automobile.

2. The flying vehicle according to claim 1, wherein when the plurality of foldable rotors of the aircraft are in a deployed state, a maximum outer diameter of a wing surface formed by the plurality of foldable rotors is greater than a width of the automobile.

3. The flying vehicle according to claim 1 or 2, wherein the automobile body comprises an automobile rear compartment and an automobile chassis, the land cabin and the automobile rear compartment are arranged side by side on the automobile chassis, and the automobile chassis is configured to carry the automobile rear compartment and the land cabin;
the automobile rear compartment comprises a rear compartment floor, the separation and connection device is arranged on the rear compartment floor, and when the aircraft is coupled to the automobile, the automobile rear compartment completely or partially encloses the aircraft.

4. The flying vehicle according to any one of claims 1 to 3, wherein the separation and connection device comprises:
a traction mechanism movably arranged on a bearing platform on the automobile body, the bearing platform and the land cabin being arranged side by side in a forward direction of the automobile; and
linear motion mechanisms arranged on the bearing platform, the traction mechanism being connected to the linear motion mechanisms, and the linear motion mechanisms are configured to drive the traction mechanism to move on the bearing platform;
the aircraft further comprises a docking mechanism connected to the aircraft body, and after the traction mechanism is connected with the docking mechanism, the traction mechanism pulls the docking mechanism to tow the aircraft onto the bearing platform.

5. The flying vehicle according to claim 4, wherein the traction mechanism comprises a traction main body and a traction ring, and the docking mechanism of the aircraft comprises a mating ring; the traction ring is arranged on a side of the traction main body facing away from the land cabin, so that when the bearing platform moves to a position aligned with the aircraft body, the traction ring and the mating ring are arranged opposite to each other.

6. The flying vehicle according to claim 5, wherein the traction ring is partially exposed on the side of the traction main body facing away from the land cabin; the traction ring is provided with a notch, is rotatably arranged on the traction main body, and is rotatable about an axis thereof; in a state where the traction mechanism and the docking mechanism are arranged opposite to each other, the traction ring rotates to align the notch with the mating ring, so that the mating ring and the traction ring are engaged with each other.

7. The flying vehicle according to any one of claims 4 to 6, wherein the separation and connection device comprises at least two linear motion mechanisms, the two linear motion mechanisms and the traction mechanism are arranged in a horizontal direction, and the two linear motion mechanisms are arranged on two opposite sides of the traction mechanism.

8. The flying vehicle according to any one of claims 1 to 7, wherein mating wheel assemblies are arranged on two opposite sides of a bottom of the aircraft body;
the separation and connection device further comprises two guide grooves, and the two guide grooves are both horizontally arranged on a bearing platform of the automobile body and extend in a forward direction of the automobile;
when the bearing platform moves to a position aligned with the aircraft body, the two guide grooves are arranged opposite to the two mating wheel assemblies in one-to-one correspondence, and each mating wheel assembly slides into one corresponding guide groove and roll within the guide groove, so as to restrict a movement trajectory of the aircraft body.

9. The flying vehicle according to claim 8, wherein each guide groove comprises a first groove and a second groove in communication with the first groove, the second groove is connected to an end of the first groove facing away from the land cabin, and a groove width of the second groove gradually increases in a direction away from the land cabin.

10. The flying vehicle according to any one of claims 1 to 9, wherein a number of the foldable rotors is six; in a flight state of the aircraft, mounting angles of rotation axes of the foldable rotors relative to the aircraft are fixed, and the six foldable rotors are sequentially arranged at intervals around a vertical line passing through a center of gravity of the aircraft.

11. The flying vehicle according to claim 10, wherein the foldable rotors form rotor revolution planes in a deployed state;
when the six foldable rotors are in the deployed state, where the aircraft is projected onto a horizontal plane, projection planes of the rotor revolution planes of at least two of the foldable rotors overlap with each other.

12. The flying vehicle according to claim 10 or 11, wherein the aircraft further comprises a frame comprising a support frame and six arms; the support frame is located at a top of the aircraft body; the six arms are all rotatably connected to the support frame and are arranged in one-to-one correspondence with the six foldable rotors, and each arm is deflectable relative to the support frame in a direction close to the support frame to reduce an outer contour of the aircraft.

13. The flying vehicle according to any one of claims 10 to 12, wherein the aircraft further comprises an auxiliary yaw system comprising two ducted fans respectively arranged on left and right sides in a forward direction of the aircraft.

14. The flying vehicle according to any one of claims 10 to 13, wherein the automobile further comprises a plurality of wheel assemblies; a number of the wheel assemblies is three, and the three wheel assemblies are arranged on a side of the automobile body facing the ground along a forward direction of the automobile.

15. The flying vehicle according to any one of claims 1 to 14, wherein the aircraft further comprises a plurality of landing gear mechanisms, and each landing gear mechanism comprises:
two landing gears rotatably connected to left and right sides of the aircraft body in a forward direction of the aircraft respectively; and
two driving members arranged in one-to-one correspondence with the two landing gears, each driving member being connected between a corresponding landing gear and the aircraft body; the driving members drive the landing gears to rotate in a direction away from the aircraft body so as to deploy into a supporting state, or rotate in a direction close to the aircraft body so as to be in a folded state.

16. The flying vehicle according to any one of claims 1 to 15, wherein the automobile further comprises an automobile electrical system comprising a first power battery pack and a first connector electrically connected to each other; the aircraft further comprises a flight electrical system comprising a second power battery pack and a second connector electrically connected to each other; when the aircraft body is coupled with the separation and connection device, the first connector and the second connector are electrically connected to allow transmission of electric power between the automobile and the aircraft.

17. The flying vehicle according to claim 16, wherein the automobile further comprises a fuel generator, and the first power battery pack and the fuel generator enable the automobile to become a range-extended electric automobile.

18. An automobile configured to be coupled with an aircraft, the aircraft being capable of vertically taking off from and landing on a ground after being decoupled from the automobile, wherein the automobile comprises:
an automobile body, a land cabin being fixedly arranged on the automobile body; and
a separation and connection device arranged on the automobile body; when the aircraft is parked on the ground, the separation and connection device is configured to connect to the aircraft and to drive the aircraft to move on the ground to be received on the automobile body so that the aircraft is detachably coupled with the automobile.

19. An aircraft configured to be coupled with an automobile, the aircraft being capable of vertically taking off from and landing on a ground after being separated from the automobile, and having a separation and connection device, wherein the aircraft comprises:
an aircraft body, a flight cabin being fixedly arranged on the aircraft body;
a plurality of foldable rotors arranged on the aircraft body; and
a docking mechanism connected to the aircraft body; when the aircraft is parked on the ground, the docking mechanism is adapted to engage with the separation and connection device, and the separation and connection device drives the aircraft to move on the ground to be received on the automobile, so that the aircraft is detachably coupled with the automobile.
